# EUROPEAN PATENT APPLICATION

(11) **EP 4 481 159 A1**
(43) Date of publication of application: **25.12.2024**
(21) Application number: 24183343.3
(22) Date of filing: 20.06.2024
(51) Int. Cl.: F01B 1/06, F01B 9/02, F02B 75/22, F02B 75/32

(54) **DRIVE DEVICE INCLUDING OSCILLATING LINEAR DRIVE MECHANISM**

(30) Priority: 23.06.2023 JP 2023103697
(71) Applicant: Nabtesco Corporation, Tokyo 102-0093 (JP); Nabtesco Automotive Corporation, Tokyo 102-0093 (JP); Z Mechanism Technology Institute Co., Ltd., Yonezawa-shi, Yamagata 992-0033 (JP)
(72) Inventor: Suda, Tomoharu, Chiyoda-ku, Tokyo, 102-0093 (JP); Ikeda, Makoto, Chiyoda-ku, Tokyo, 102-0093 (JP); Minato, Ichiro, Chiyoda-ku, Tokyo, 102-0093 (JP); Shimomura, Takeo, Chiyoda-ku, Tokyo, 102-0093 (JP); Yoshizawa, Yutaka, Yonezawa-shi, Yamagata, 992-0033 (JP)
(74) Representative: Grünecker Patent- und Rechtsanwälte PartG mbB

(57) **Abstract**

The present invention relates to a drive device (10). The drive device (10) includes a case (12), a first crankshaft (CR1), a second crankshaft (CR2), a first slider (S1), a second slider (S2), a first moving unit (P1, CN1), a first guide (30), and a second guide (32). At least one of the first guide (30) or the second guide (32) is a separate part from the case (12) that is detachably secured onto the case (12).

## Description

### TECHNICAL FIELD

The embodiments of the invention relate to a drive device including an oscillating linear drive mechanism configured to convert rotation and oscillatory motion of a rotator that rotates eccentrically into linear motion.

### BACKGROUND

A double eccentric arc oscillating mechanism is known as a mechanism for power conversion of rotational motion into linear motion. In a double eccentric arc oscillating mechanism, an eccentric shaft on one side performs linear motion by defining the radius of a double circular eccentric mechanism in a specific ratio. In such an oscillating mechanism, the crankshaft (eccentric shaft) that supports the reciprocating portion as a moving unit is supported by a cantilever structure. When the oscillation fulcrum is placed directly below the reciprocating portion, an input/output shaft can be provided on one end of the eccentric shaft. However, in the case where the oscillation fulcrum is placed directly below the reciprocating portion, when an external force acts on the reciprocating portion, the cantilevered eccentric shaft may deform and interfere with the operation of the oscillation fulcrum.

### RELEVANT REFERENCE

### LIST OF RELEVANT PATENT LITERATURE

Patent Literature 1: Publication of Japanese Patent No. 6593945
Patent Literature 2: Publication of Japanese Patent No. 6755542

### SUMMARY

The object of the embodiments of the invention is to provide a drive device capable of stable power conversion of rotational motion into linear motion and achieving a high operation efficiency.

An embodiment provides a drive device including: a case; a first crankshaft including a main shaft and an eccentric shaft, the main shaft having a first central axis, the eccentric shaft having a second central axis parallel to the first central axis and being eccentric to the main shaft, both axial ends of the main shaft being supported by the case so as to be rotatable around the first central axis; a second crankshaft supported by the eccentric shaft so as to be rotatable around the second central axis, the second crankshaft including a first journal portion and a second journal portion, the first journal portion being eccentric to the second central axis in one direction, the second journal portion being eccentric to the second central axis in another direction; a first slider rotatably provided on the first journal portion; a second slider rotatably provided on the second journal portion; a first moving unit rotatably connected to the first journal portion and configured to perform linear motion in a first direction orthogonal to the first central axis as the first journal portion moves; a first guide provided on the case and configured to guide movement of the first slider along the first direction; a second guide provided on the case and configured to guide linear motion of the second slider along a second direction, the second direction being orthogonal to the first central axis and orthogonal to the first direction; and a third guide provided on the case and configured to guide the linear motion of the first moving unit in the first direction.

### ADVANTAGEOUS EFFECTS

The invention provides a drive device capable of stable power conversion of rotational motion into linear motion and achieving a high operation efficiency.

### BRIEF DESCRIPTION OF THE DRAWINGS

Fig. 1 is a perspective view showing an external appearance of a drive device according to a first embodiment.
Fig. 2 is a perspective view showing a drive mechanism of the drive device.
Fig. 3 is an exploded perspective view showing the drive mechanism.
Fig. 4 is a side view showing the drive mechanism.
Fig. 5 is a sectional view showing the drive device.
Fig. 6 is a side view showing the drive device viewed from one side thereof, the case of the drive device being partially taken away.
Fig. 7 is a side view showing the drive device viewed from the other side thereof, the case of the drive device being partially taken away.
Fig. 8 is a side view showing a drive mechanism of a drive device according to a first variation.
Fig. 9 is a side view showing a drive mechanism of a drive device according to a second variation.
Fig. 10 is a side view showing a drive mechanism of a drive device according to a third variation.
Fig. 11 is a side view showing a drive mechanism of a drive device according to a fourth variation.
Fig. 12 is a perspective view showing a drive mechanism of a drive device according to a second embodiment.
Fig. 13 is a perspective view showing a drive mechanism of a drive device according to a third embodiment.
Fig. 14 is a perspective view showing a drive mechanism of a drive device according to a fourth embodiment.
Fig. 15 is a perspective view showing a drive mechanism of a drive device according to a fifth embodiment.
Fig. 16 is a perspective view showing a drive mechanism of a drive device according to a sixth embodiment.
Fig. 17 is a perspective view showing the drive mechanism of the drive device according to the sixth embodiment.
Fig. 18 is a side view showing the drive device according to the sixth embodiment viewed from one side thereof, the case 12 of the drive device being partially taken away.
Fig. 19 is a side view showing the drive device according to the sixth embodiment viewed from the other side thereof, the case 12 of the drive device being partially taken away.
Fig. 20 is a perspective view showing a drive mechanism including a first variation of a guide plate of a slider.
Fig. 21 is a side view showing the first variation of the guide plate.
Fig. 22 is a side view showing a second variation of the guide plate.
Fig. 23 is a side view showing a drive mechanism including a third variation of the guide plate.
Fig. 24A is a perspective view showing a first variation of the slider.
Fig. 24B is a perspective view showing a second variation of the slider.
Fig. 25 is a perspective view showing a variation of a second crankshaft.
Fig. 26 is a perspective view showing a journal portion in the variation of the second crankshaft.
Fig. 27 is a side view showing a first variation of an internal counterweight.
Fig. 28 is a perspective view showing how the first variation of the internal counterweight is assembled onto a journal portion.
Fig. 29 is a side view showing a second variation of the internal counterweight.
Fig. 30 is a perspective view showing how the second variation of the internal counterweight is assembled onto a journal portion.
Fig. 31 is a front view showing an eccentric shaft being inserted into the variation of the second crankshaft as viewed in a radial direction.
Fig. 32 is a sectional view along an axial direction showing the journal portion in the variation of the second crankshaft.
Fig. 33 is a front view showing the eccentric shaft as viewed in the radial direction.
Fig. 34 is a front view showing the outer shape of the variation of the second crankshaft overlapping the eccentric shaft shown in Fig. 33.
Fig. 35A is a perspective view showing a variation of a second counterweight.
Fig. 35B is a perspective view showing a variation of a first counterweight.
Fig. 36 is a sectional view along the axial direction showing a variation where the eccentric shaft is integrated with one of the counterweights.
Fig. 37 is a sectional view along the axial direction showing a crankshaft assembly.
Fig. 38 is a sectional view along the axial direction showing how a connecting rod and a slider are attached onto the journal portion in the variation of the second crankshaft.
Fig. 39 is a side view showing how to insert one of the pistons of the crankshaft assembly into a corresponding cylinder sleeve.
Fig. 40 is a side view showing how to insert the other piston into a corresponding cylinder sleeve after the step shown in Fig. 39.
Fig. 41 A is a perspective view showing a variation of one of the cylinder sleeves.
Fig. 41B is a perspective view showing a variation of the other cylinder sleeve.
Fig. 42A is a perspective view showing a coupling of a motor drive shaft being in a reduced-diameter state.
Fig. 42B is a perspective view showing that the coupling of the motor drive shaft being in an increased-diameter state.
Fig. 43 is a sectional view along the axial direction showing how the motor drive shaft is connected to a main shaft of the drive mechanism.
Fig. 44A is a side view showing one of the connecting rods of the drive mechanism as viewed in the axial direction.
Fig. 44B is a side view showing the other connecting rod of the drive mechanism as viewed in the axial direction.

### DESCRIPTION OF THE PREFERRED EMBODIMENTS

Embodiments of the present invention will be hereinafter described with reference to the drawings. The disclosure is only an example of the invention. Any modification that can be easily devised by a person skilled in the art within the purport of the invention is naturally encompassed in the scope of the invention. In addition, the drawings may be represented schematically in terms of width, thickness, shape or the like of each part compared to the actual aspects in order to make clearer explanation, but this is only to present an example and does not limit the understanding of the invention. In this specification and the drawings, the same elements as described previously for foregoing figures are denoted by the same signs and may not be described again.

### <First Embodiment>

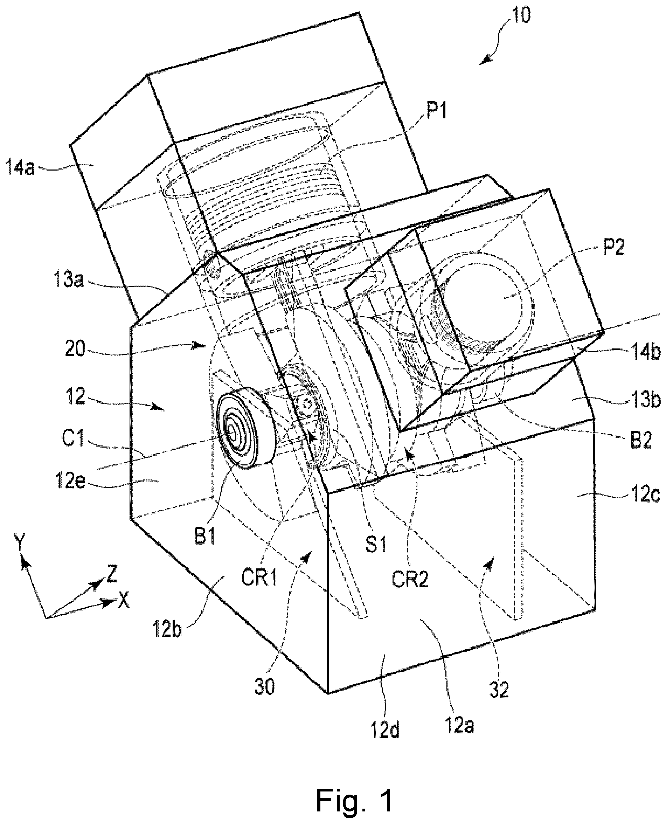

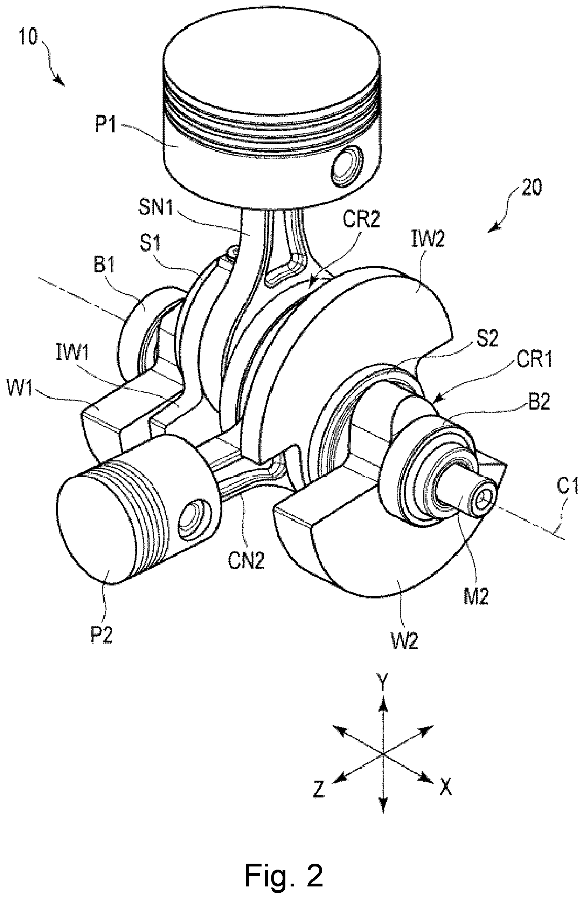

Fig. 1 is a perspective view schematically showing an external appearance of a drive device according to a first embodiment. Fig. 2 is a perspective view showing a drive mechanism of the drive device. In this embodiment, the drive device 10 is configured as a two-cylinder compressor or generator, for example. As shown in Fig. 1, the drive device 10 includes a case (crank case) 12, a first cylinder 14a, a second cylinder 14b, and a two-axis oscillating linear drive mechanism (hereinafter referred to as the drive mechanism) 20. The case 12 has an approximately rectangular box shape. The first cylinder 14a and the second cylinder 14b are provided on the case 12. The drive mechanism 20 is located in the case 12, in the first cylinder 14a, and in the second cylinder 14b. In one example, the case 12 has a bottom wall 12a, a first side wall 12b, a second side wall 12c, a third side wall 12d, a fourth side wall 12e, a first ceiling wall 13a, and a second ceiling wall 13b. The bottom wall 12a is rectangular in shape. The first side wall 12b and the second side wall 12c are erected along the two sides forming the bottom wall 12a. The first side wall 12b and the second side wall 12c are approximately pentagonal in shape. The third side wall 12d and the fourth side wall 12e are erected along two opposing sides forming the bottom wall 12a. The first ceiling wall 13a and the second ceiling wall 13b connect to the top edges of the first to fourth side walls. The first ceiling wall 13a and the second ceiling wall 13b are inclined with respect to the bottom wall 12a and are opposed to each other at an angle of approximately 90 degrees.

The first cylinder 14a, which serves as a third guide, is installed on the first ceiling wall 13a. The first cylinder 14a extends in a direction orthogonal to the first ceiling wall 13a (Y direction). The second cylinder 14b, which serves as a fourth guide, is installed on the second ceiling wall 13b. The second cylinder 14b extends in a direction orthogonal to the second ceiling wall 13b (Z direction). The Y direction and the Z direction are orthogonal to each other, and the first cylinder 14a and the second cylinder 14b are located at an angle of approximately 90 degrees.

A first guide 30 and a second guide 32 are provided in the case 12. The first guide 30 and the second guide 32 are fixed to the inner surface of the case 12. As will be described later, the first guide 30 and the second guide 32 guide the linear motion of sliders of the drive mechanism 20.

The drive mechanism 20 includes a first crankshaft (inner crankshaft) CR1, a second crankshaft (outer crankshaft) CR2, first and second sliders S1 and S2 attached to the second crankshaft CR2, and first and second pistons P1 and P2 connected to the second crankshaft CR2. The first crankshaft CR1 includes a pair of main shafts each extending along the first central axis C1. These main shafts are rotatably supported by bearings B1 and B2 provided in the first and second side walls 12b and 12c of the case 12. Thus, the first crankshaft CR1 is supported at both ends thereof by the case 12 with the first central axis C1 coinciding with the X direction. The X direction is orthogonal to the Y direction and the Z direction and is parallel to the bottom wall 12a of the case 12. The first piston P1 is located in the first cylinder 14a. The first piston P1 moves linearly up and down in the Y direction. The second piston P2 is located in the second cylinder 14b. The second piston P2 moves linearly up and down in the Z direction. The first slider S1 attached to the second crankshaft CR2 is guided by the first guide 30 to move linearly in the Y direction. The second slider attached to the second crankshaft CR2 is guided by the second guide 32 to move linearly in the Z direction.

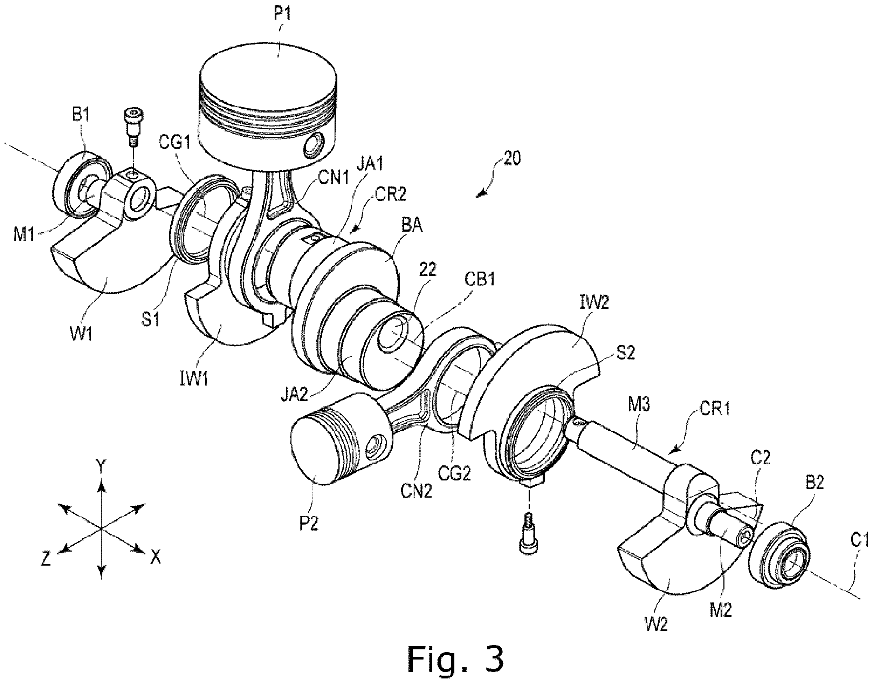

A description will now be given of the configuration of the drive mechanism 20. Fig. 2 is a perspective view showing the drive mechanism. Fig. 3 is an exploded perspective view showing the drive mechanism. As shown in Fig. 2, the drive mechanism 20 includes the first crankshaft (inner crankshaft) CR1 and the second crankshaft (outer crankshaft) CR2. The second crankshaft CR2 is rotatably supported by the first crankshaft CR1. The first crankshaft CR1 includes a pair of main shafts M1 and M2 having the first central axis C1 and also includes an eccentric shaft M3 having a second central axis C2. The pair of main shafts M1 and M2 are separated from each other in the axial direction by a predetermined distance. One main shaft M1 is connected to one end (first end) of the eccentric shaft M3 via a first counterweight W1. The other main shaft M2 is connected to the other end (second end) of the eccentric shaft M3 via a second counterweight W2. The second central axis C2 of the eccentric shaft M3 extends in parallel to the first central axis C1 and is spaced apart (eccentric) from the first central axis C1 by a predetermined distance. In this embodiment, the main shaft M2, the second counterweight W2, and the eccentric shaft M3 are integrated together. The main shaft M1 and the first counterweight W1 are integrated together. The first end of the eccentric shaft M3 is detachably connected to the first counterweight W1.

The main shaft M1 is rotatably supported on the case 12 by a bearing (e.g., ball bearing) B1. The main shaft M2 is rotatably supported on the case 12 by a bearing (e.g., ball bearing) B2. At least one of the main shafts, e.g., the main shaft M2, projects outward through the case 12 and constitutes an input/output shaft. It is also possible that the other main shaft M1 is used as the input/output shaft.

As shown in Fig. 3, the second crankshaft CR2 includes a first journal portion JA1 having a cylindrical shape, a second journal portion JA2 having a cylindrical shape, and a base portion BA having a disc-like shape. The base portion BA is located between the first journal portion JA1 and the second journal portion JA2. The base portion BA has a central axis CB1. The first journal portion JA1 is formed to have a smaller diameter than the base portion BA. Furthermore, the first journal portion JA1 is eccentrically located with respect to the central axis CB1 of the base portion BA. The second journal portion JA2 is formed to have a smaller diameter than the base portion BA. Furthermore, the second journal portion JA2 is eccentrically located with respect to the central axis CB1 of the base portion BA in the opposite direction to the first journal portion JA1. The first journal portion JA1 has a central axis CG1. The central axis CG1 is parallel to the central axis CB1 of the base portion BA and spaced apart from the central axis CB1 by a predetermined distance in the radial direction. The second journal portion JA2 has a central axis CG2. The central axis CG2 is parallel to the central axis CB1 of the base portion BA and spaced apart from the central axis CB1 by a predetermined distance in the direction 180 degrees opposite to the central axis CG1. The second crankshaft CR2 has a through hole 22 extending through the first journal portion JA1, the base portion BA, and the second journal portion JA2. The through hole 22 extends coaxially with the central axis CB1 of the base portion BA and is open at the end surfaces of the first journal portion JA1 and the second journal portion JA2.

The drive mechanism 20 further includes the first piston P1, the second piston P2, the first slider S1, the second slider S2, a first internal counterweight IW1, and a second internal counterweight IW2. The first slider S1 and the first internal counterweight IW1 are attached to the first journal portion JA1 of the second crankshaft CR2. The first piston P1 is connected to the first journal portion JA1 via a connecting rod CN1. The second slider S2 and the second internal counterweight IW2 are attached to the second journal portion JA2 of the second crankshaft CR2. The second piston P2 is connected to the second journal portion JA2 via a connecting rod CN2. In this embodiment, the first piston P1 has a larger diameter than the second piston P2. The first piston P1 and the connecting rod CN1 constitute a first moving unit. The second piston P2 and the connecting rod CN2 constitute a second moving unit.

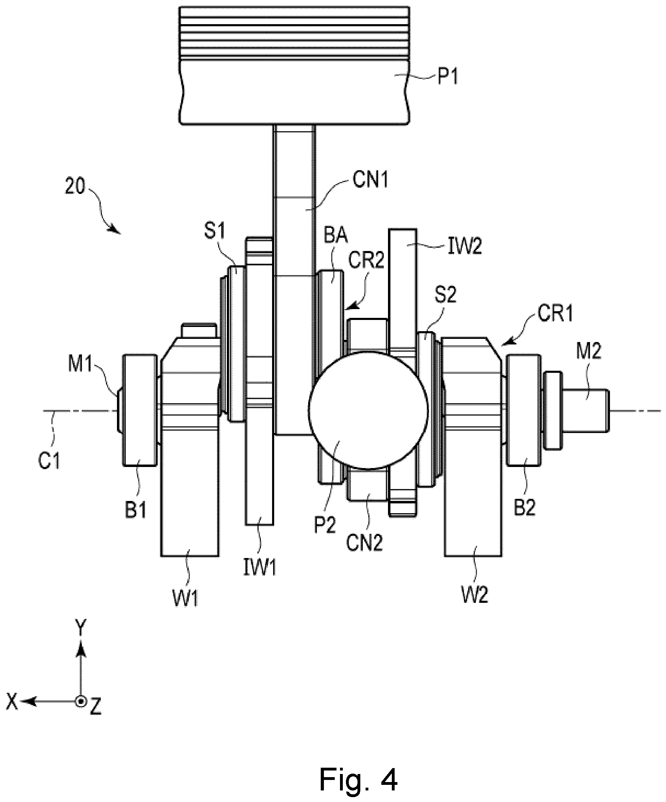

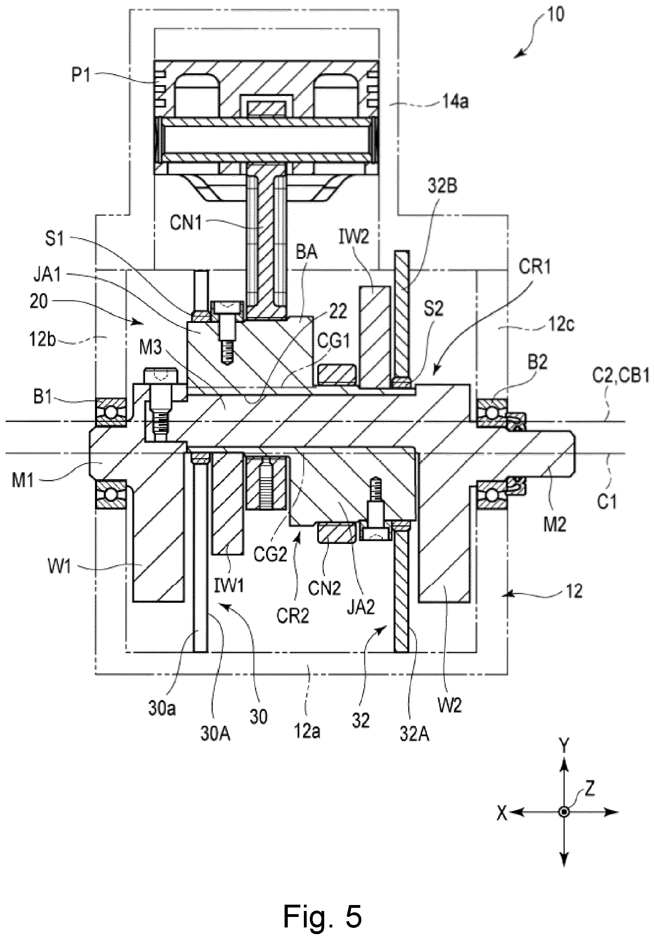

Fig. 4 is a side view showing the drive mechanism 20. Fig. 5 is a sectional view showing the drive device including the drive mechanism 20. As shown in Fig. 4, the main shafts M1 and M2 of the first crankshaft CR1 are supported on the side walls 12b and 12c of the case 12 via the bearings B1 and B2 so as to be rotatable around the first central axis C1. The first central axis C1 extends substantially parallel to the bottom wall 12a of the case 12. The eccentric shaft M3 of the first crankshaft CR1 is inserted through the through hole 22 of the second crankshaft CR2. The second crankshaft CR2 is supported by the eccentric shaft M3 so as to be rotatable around the central axis C2. As the first crankshaft CR1 rotates around the first central axis C1, the second crankshaft CR2 revolves around the first central axis line C1. Furthermore, as the second crankshaft CR2 rotates around the second central axis C2, the first journal portion JA1 revolves around the second central axis C2, and the second journal portion JA2 revolves around the second central axis C2. As a result, the first journal portion JA1 moves linearly in the Y direction, and the second journal portion JA2 moves linearly in the Z direction. Thus, each of the first and second journal portions JA1 and JA2 constitutes an oscillation fulcrum for converting rotational motion into linear motion.

One end (first end) of the connecting rod CN1 is rotatably connected to the first piston P1 via a piston pin. The other end (second end) of the connecting rod CN1 is rotatably connected to the outer peripheral surface of the first journal portion JA1. Thus, the first piston P1 is connected to the second crankshaft CR2 via the connecting rod CN1. The first piston P1 and the connecting rod CN1 move linearly in the Y direction in conjunction with the linear motion of the first journal portion JA1. At that time, the first cylinder 14a functions as a guide for guiding the linear movement of the first piston P1 in the Y direction. The first internal counterweight IW1 is connected to the outer peripheral surface of the first journal portion JA1 and extends radially outward from the first journal portion JA1. In one example, the first slider S1 has an annular shape. The first slider is attached to the outer peripheral surface of the first journal portion JA1 via a bearing. The first slider is attached so as to be rotatable around the central axis CG1 of the first journal portion JA1. In this embodiment, the first journal portion JA1 has the connecting rod CN1, the first internal counterweight IW1, and the first slider S1 arranged thereon in this order from the base portion BA.

One end (first end) of the connecting rod CN2 is rotatably connected to the second piston P2 via a piston pin. The other end (second end) of the connecting rod CN2 is rotatably connected to the outer peripheral surface of the second journal portion JA2 of the second crankshaft CR2. Thus, the second piston P2 is connected to the second crankshaft CR2 via the connecting rod CN2. The second piston P2 and the connecting rod CN2 move linearly in the Z direction in conjunction with the linear motion of the second journal portion JA2. At that time, the second cylinder 14b functions as a guide for guiding the linear movement of the second piston P2 in the Z direction. The second internal counterweight IW2 is connected to the outer peripheral surface of the second journal portion JA2. The second internal counterweight IW2 extends from the second journal portion JA2 in the opposite radial direction than the first internal counterweight IW1. in one example, the second slider S2 has an annular shape and is attached to the outer peripheral surface of the second journal portion JA2 via a bearing. The second slider S2 is attached so as to be rotatable around the central axis CG2 of the second journal portion JA2. In this embodiment, the second journal portion JA2 has the connecting rod CN2, the second internal counterweight IW2, and the second slider S2 arranged thereon in this order from the base portion BA.

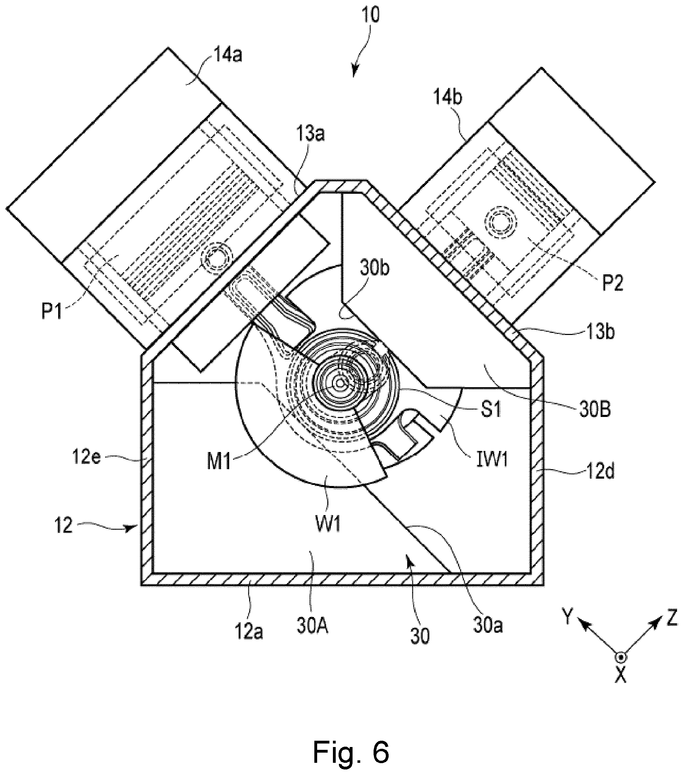

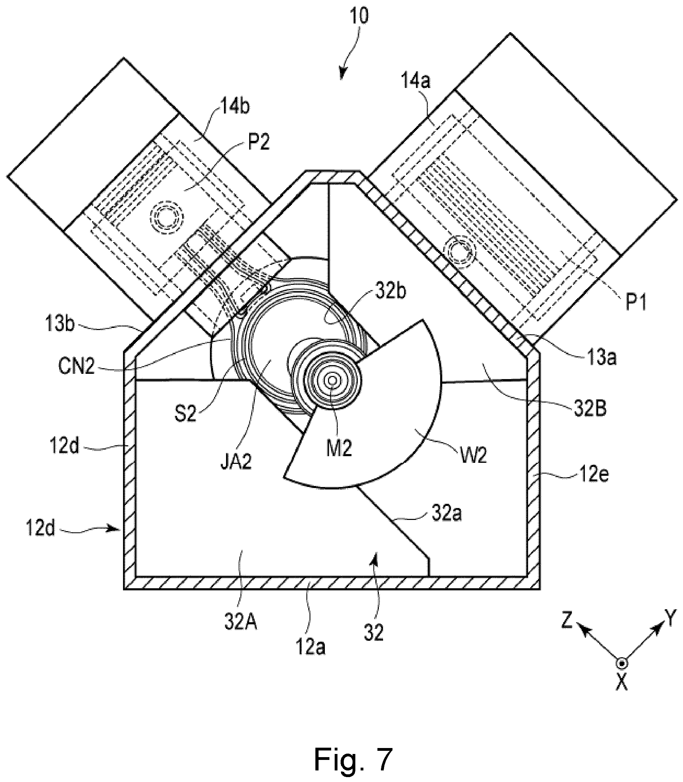

Fig. 6 is a side view showing the drive device viewed from one side thereof, the case 12 of the drive device being partially taken away. Fig. 7 is a side view showing the drive device viewed from the other side thereof, the case 12 of the drive device being partially taken away. As shown in Figs. 6 and 7, the first guide 30 guides the linear motion of the first journal portion JA1 as the oscillation fulcrum and the first slider S1. The first guide 30 includes, for example, a pair of guide plates 30A and 30B. The guide plate 30A is erected substantially vertically on the bottom wall 12a and the side wall 12e of the case 12. The guide plate 30A has a guide surface 30a constituted by the side edge extending linearly in the Y direction. The guide plate 30B is erected substantially vertically on the second ceiling wall 13b and the third side wall 12d of the case 12. The guide plate 30B has a guide surface 30b constituted by the side edge extending linearly in the Y direction. The guide surface 30b is parallel and opposed to the guide surface 30a at an interval approximately equal to the diameter of the first slider S1.

The guide plates 30A and 30B are provided at the same position as the first slider S1 in the X direction. The first slider S1 is sandwiched between the guide surfaces 30a and 30b, and the outer peripheral surface of the first slider S1 is in contact with the guide surfaces 30a and 30b. Thus, during the linear motion of the first slider S1 in the Y direction, the first slider S1 is guided in the Y direction by the guide surfaces 30a and 30b.

As shown in Figs. 6 and 7, the second guide 32 guides the linear motion of the second journal portion JA2 as the oscillation fulcrum and the second slider S2. The second guide 32 includes, for example, a pair of guide plates 32A and 32B. The guide plate 32A is erected substantially vertically on the bottom wall 12a and the side wall 12d of the case 12. The guide plate 32A has a guide surface 32a constituted by the side edge extending linearly in the Z direction. The guide plate 32B is erected substantially vertically on the first ceiling wall 13a and the fourth side wall 12e of the case 12. The guide plate 32B has a guide surface 32b constituted by the side edge extending linearly in the Z direction. The guide surface 32b is parallel and opposed to the guide surface 32a at an interval approximately equal to the diameter of the second slider S2. The guide plates 32A and 32B are provided at the same position as the second slider S2 in the X direction. The second slider S2 is sandwiched between the guide surfaces 32a and 32b, and the outer peripheral surface of the second slider S2 is in contact with the guide surfaces 32a and 32b. Thus, during the linear motion of the second slider S2 in the Z direction, the second slider S2 is guided in the Z direction by the guide surfaces 32a and 32b.

A description is given of operation of the drive device 10 configured as described above. For example, when the drive device 10 is used as a compressor, rotational force is input to the main shaft M2, and the first crankshaft CR1 is rotated around the first central axis C1. Accordingly, the second crankshaft CR2 revolves around the first central axis C1 and rotates around the second central axis C2. Furthermore, the first journal portion JA1 of the second crankshaft CR2 revolves around the second central axis C2, and the second journal portion JA2 revolves around the second central axis C2.

Thus, the first journal portion JA1 and the first slider S1, the first internal counterweight IW1, the connecting rod CN1, and the first piston P1 attached to the first journal portion JA1 move linearly in the Y direction. The linear motion of the first journal portion JA1 and the first slider S1 is guided linearly by the first guide 30. Furthermore, the linear motion of the first piston P1 is guided by the first cylinder 14a. As the first piston P1 moves up and down in the first cylinder 14a, the gas (air, refrigerant, etc.) in the first cylinder 14a is compressed and pressurized, and supplied to the outside through a discharge port (not shown).

The second journal portion JA2 of the second crankshaft CR2 and the second slider S2, the second internal counterweight IW2, the connecting rod CN2, and the second piston P2 attached to the second journal portion JA2 move linearly in the Z direction. The linear motion of the second journal portion JA2 and the second slider S2 is guided linearly by the second guide 32. Furthermore, the linear motion of the second piston P2 is guided by the second cylinder 14b. As the second piston P2 moves up and down in the second cylinder 14b, the gas (air, refrigerant, etc.) in the second cylinder 14b is compressed and pressurized, and supplied to the outside through a discharge port (not shown).

When the first piston P1 and the second piston P2 have different diameters, as in this embodiment, what is called a two-stage compressor can be realized. Specifically, the first-stage compression is performed using the first piston P1 with a larger diameter for pressurization to substantially the desired pressure, before the second-stage compression is performed using the second piston P2 with a smaller diameter to adjust the pressure.

In the drive device 10 according to the first embodiment configured as described above, the first crankshaft CR1 of the two-axis oscillating linear drive mechanism 20 is rotatably supported at both ends thereof. This provides stable support for the second crankshaft CR2 constituting the oscillation fulcrum, and prevents the occurrence of defects in the oscillation fulcrum. At the same time, both ends of the first crankshaft CR1, or the main shafts M1 and M2, can be used as the input/output shaft. Furthermore, since the first and second journal portions JA1 and JA2, each constituting the oscillation fulcrum, are guided by the guides 30 and 32 provided on the case 12, the oscillation fulcrums can perform stable and smooth linear motion. In addition, even when a reciprocating unit (piston) is placed directly below the oscillation fulcrum, the smooth linear motion of the oscillation fulcrum is not disturbed. These result in a highly efficient and low-vibration drive device.

The drive device 10 is not limited to a compressor, but may be applied to generators, engines and the like. In this case, a valve mechanism, fuel supply device, ignition device, and exhaust mechanism are installed in the cylinder heads of the first cylinder 14a and the second cylinder 14b. In this structure, fuel is supplied and ignited, combusted, and exhausted in the first and second cylinders 14a and 14b to drive the first and second pistons P1 and P2 in the Y and Z directions, respectively, to rotate the first crankshaft CR1.

Next, a description is given of a drive device according to a variation or another embodiment. In the following description of the variation or the other embodiment, the same elements as in the first embodiment described above are denoted by the same reference signs, and detailed descriptions thereof will be omitted or simplified to focus on the differences from the first embodiment.

### <First Variation>

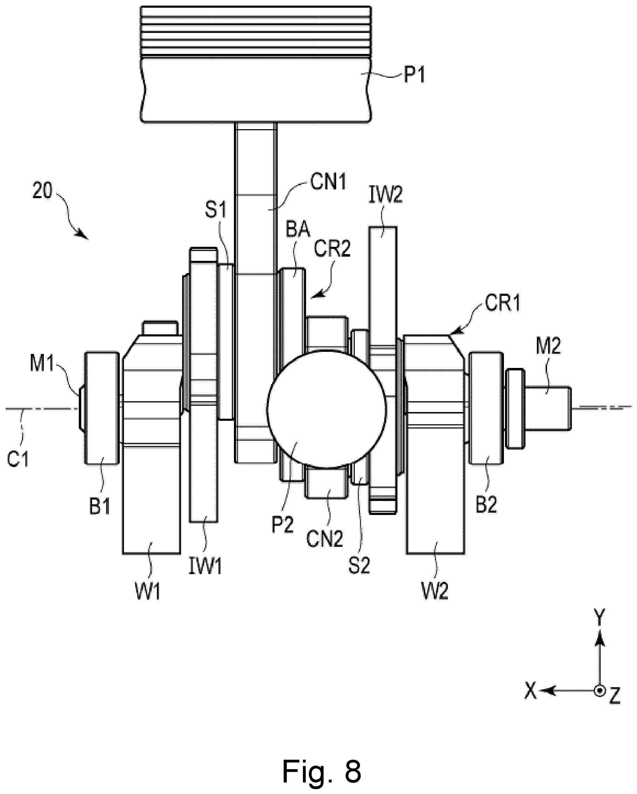

Fig. 8 is a side view showing a drive mechanism of a drive device according to a first variation. According to the first variation, the order of arrangement of the piston, slider, and counterweight in the X direction is different than in the first embodiment described above. As shown in Fig. 8, according to the first variation, the first journal portion JA1 has the connecting rod CN1, the first slider S1, and the first internal counterweight IW1 arranged thereon in this order from the base portion BA in the X direction. The second journal portion JA2 has the connecting rod CN2, the second slider S2, and the second internal counterweight IW2 arranged thereon in this order from the base portion BA.

### <Second Variation>

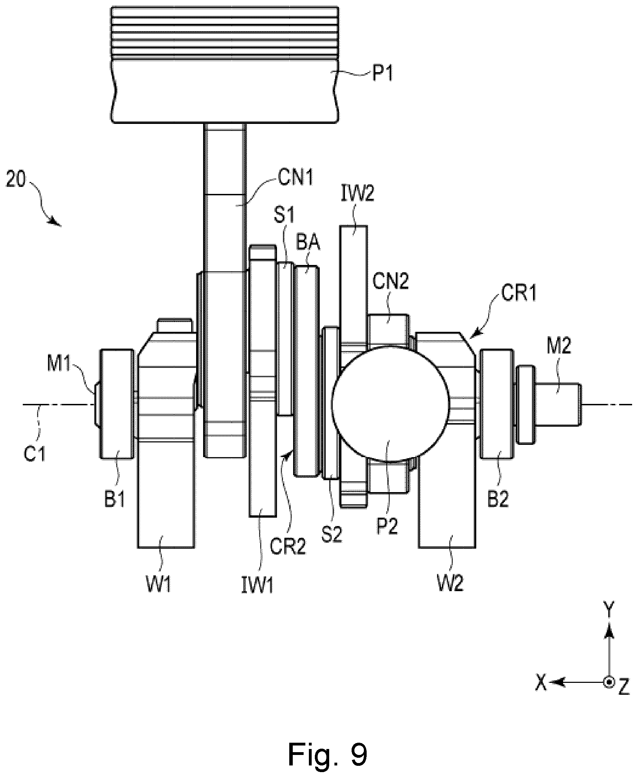

Fig. 9 is a side view showing a drive mechanism of a drive device according to a second variation. As shown in Fig. 9, according to the second variation, the first journal portion JA1 has the first slider S1, the first internal counterweight IW1, and the connecting rod CN1 arranged thereon in this order from the base portion BA in the X direction. The second journal portion JA2 has the second slider S2, the second internal counterweight IW2, and the connecting rod CN2 arranged thereon in this order from the base portion BA.

### <Third Variation>

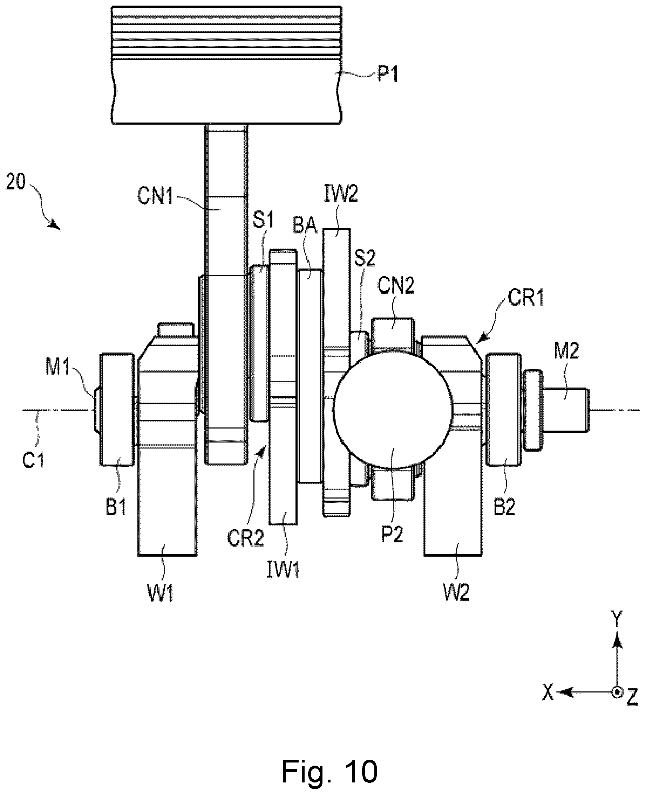

Fig. 10 is a side view showing a drive mechanism of a drive device according to a third variation. As shown in Fig. 10, according to the third variation, the first journal portion JA1 has the first internal counterweight IW1, the first slider S1, and the connecting rod CN1 arranged thereon in this order from the base portion BA in the X direction. The second journal portion JA2 has the second internal counterweight IW2, the second slider S2, and the connecting rod CN2 arranged thereon in this order from the base portion BA.

### <Fourth Variation>

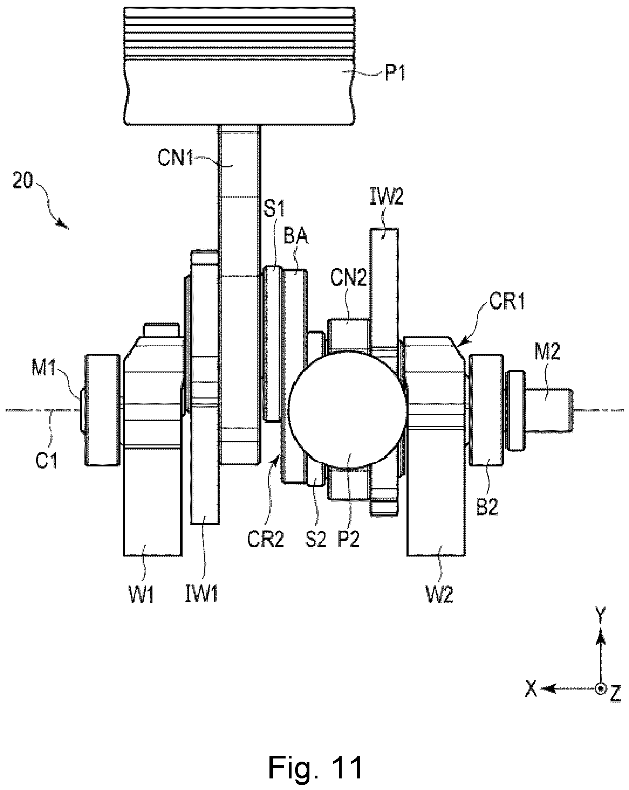

Fig. 11 is a side view showing a drive mechanism of a drive device according to a fourth variation. As shown in Fig. 11, according to the fourth variation, the first journal portion JA1 has the first slider S1, the connecting rod CN1, and the first internal counterweight IW1 arranged thereon in this order from the base portion BA in the X direction. The second journal portion JA2 has the second slider S2, the connecting rod CN2, and the second internal counterweight IW2 arranged thereon in this order from the base portion BA. In the first to fourth variations above, other components in the drive mechanism are the same as those in the drive mechanism according to the first embodiment described above. However, the positions of the first and second cylinders are adjusted according to the positions of the first and second pistons P1 and P2. The first to fourth variations can produce the same effects as the first embodiment.

In the first embodiment, the drive device 10 has two cylinders, but this configuration is not limitative. It is also possible that the drive device 10 has a single cylinder or three or more cylinders.

### <Second Embodiment>

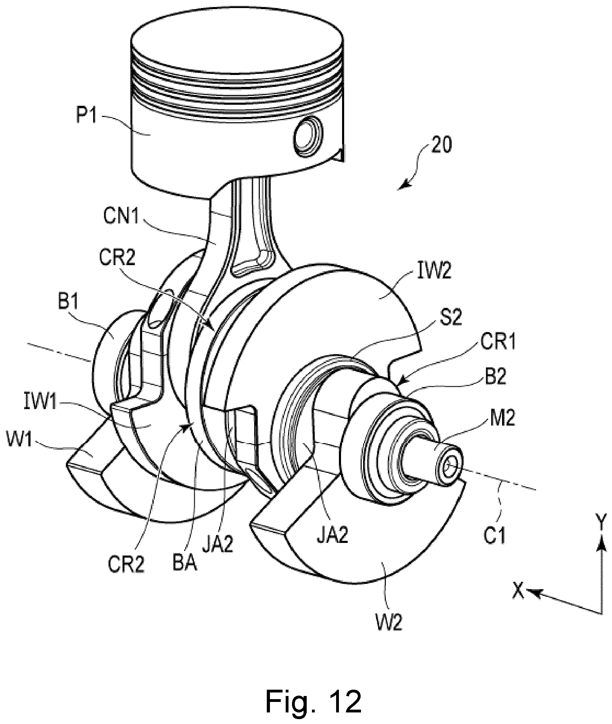

Fig. 12 is a perspective view showing a drive mechanism of a drive device according to a second embodiment. As shown in Fig. 12, according to the second embodiment, the drive mechanism 20 of the drive device 10 has a single-cylinder configuration with only the first piston P1, for example. The first piston P1 is connected to the first journal portion JA1 (see Fig. 5) of the second crankshaft CR2 via the connecting rod CN1. The first slider S1 and the first internal counterweight IW1 are attached to the first journal portion JA1. The second slider S2 and the second internal counterweight IW2 are attached to the second journal portion JA2 of the second crankshaft CR2. In this configuration, both the first journal portion JA1 and the second journal portion JA2, each constituting an oscillation fulcrum, are guided for linear motion by the guide. Therefore, even in the case where the drive mechanism 20 has a single cylinder, the load acting on the piston is small, and stable ultra-low vibration operation can be achieved. At the same time, the single-cylinder configuration makes it possible to reduce the size of the drive device 10.

### <Third Embodiment>

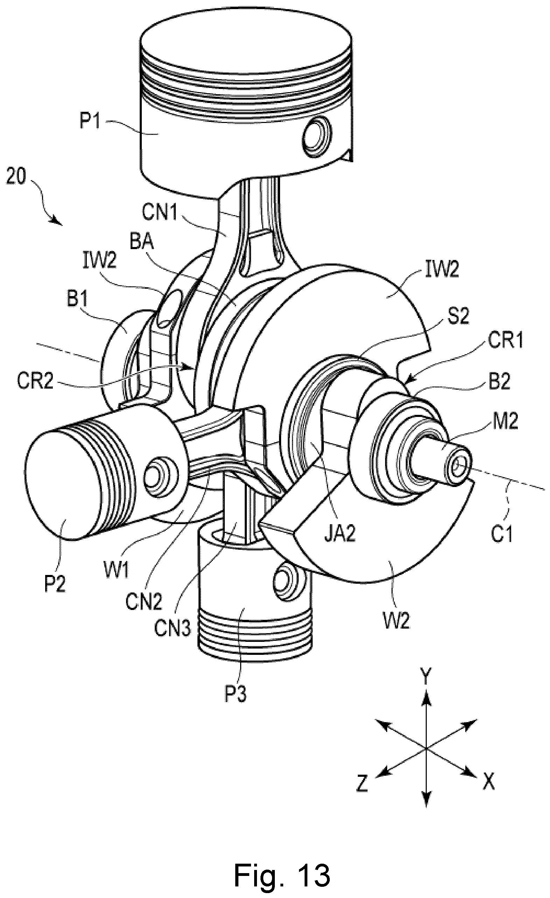

Fig. 13 is a perspective view showing a drive mechanism of a drive device according to a third embodiment. As shown in Fig. 13, according to the third embodiment, the drive mechanism 20 of the drive device 10 has a three-cylinder configuration additionally including a third piston P3. The third piston P3 is connected to the first journal portion JA1 (see Fig. 5) of the second crankshaft CR2 via a connecting rod CN3. The base end of the connecting rod CN3 is the same as, or integrated with, the base end of the connecting rod CN1. As the first journal portion JA1 performs the linear motion, the first piston P1 and the third piston P3, which are integrated together, are moved linearly in the Y direction. In one example, the third piston P3 has a diameter smaller than that of the first piston P1 and equal to that of the second piston P2.

### <Fourth Embodiment>

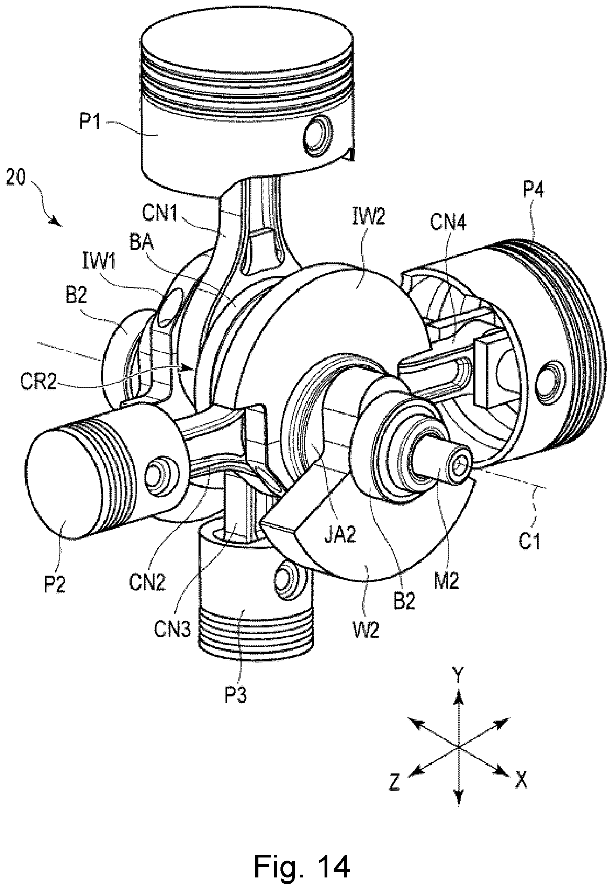

Fig. 14 is a perspective view showing a drive mechanism of a drive device according to a fourth embodiment. As shown in Fig. 14, according to the fourth embodiment, the drive mechanism 20 of the drive device 10 has a four-cylinder configuration additionally including a fourth piston P4. The fourth piston P4 is connected to the second journal portion JA2 of the second crankshaft CR2 via a connecting rod CN4. The base end of the connecting rod CN4 is the same as, or integrated with, the base end of the connecting rod CN2. As the second journal portion JA2 performs the linear motion, the second piston P2 and the fourth piston P4, which are integrated together, are moved linearly in the Z direction. In one example, the fourth piston P4 has a diameter larger than that of the second piston P2 and equal to that of the first piston P1 .

### <Fifth Embodiment>

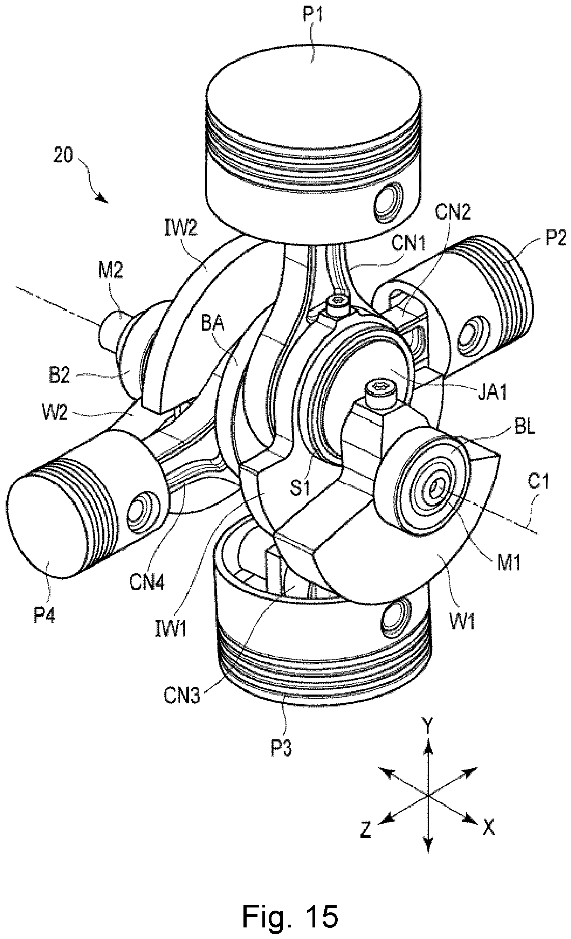

Fig. 15 is a perspective view showing a drive mechanism of a drive device according to a fifth embodiment. Fig. 15 is a perspective view showing the drive mechanism 20 viewed from the opposite direction than in Fig. 14. As shown in Fig. 15, according to the fifth embodiment, the drive mechanism 20 of the drive device 10 has a four-cylinder configuration, as in the fourth embodiment. In this embodiment, the third piston P3 has a diameter larger than that of the second piston P2 and equal to that of the first piston P1. The fourth piston P4 has a diameter smaller than that of the first piston P1 and equal to that of the second piston P2. In other words, the first piston P1 and the third piston P3 having a larger diameter are connected to each other via the connecting rods CN1 and CN3 that are integrated together, and the first piston P1 and the third piston P3 are moved linearly up and down in the Y direction. The second piston P2 and the fourth piston P4 having a smaller diameter are connected to each other via the connecting rods CN2 and CN4 that are integrated together, and the second piston P2 and the fourth piston P4 are moved linearly up and down in the Z direction.

In the third to fifth embodiments described above, the other components in the drive mechanism 20 are the same as those in the drive mechanism 20 according to the first embodiment. The drive devices having the three-cylinder or four-cylinder configuration according to the third to fifth embodiments can produce the same effects as the drive device according to the first embodiment described above.

### <Sixth Embodiment>

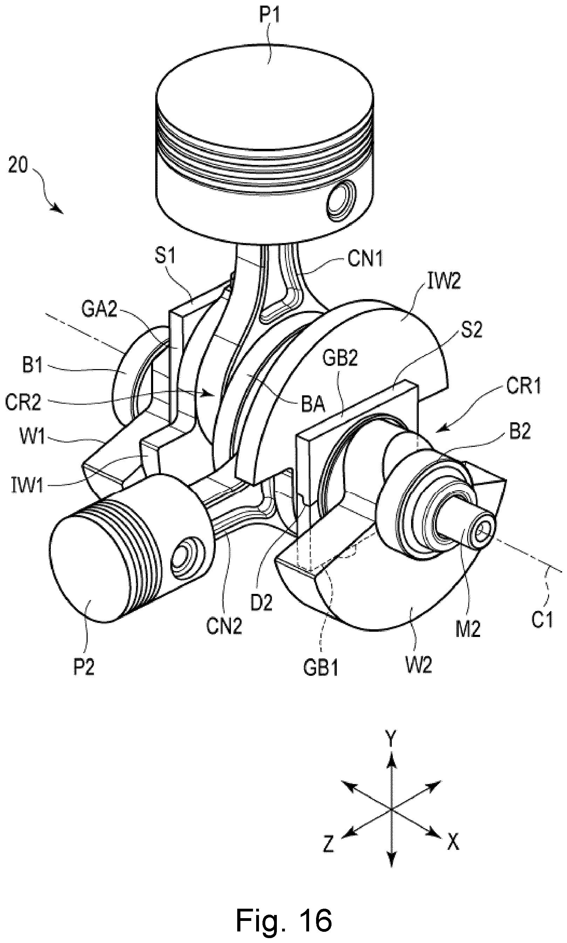

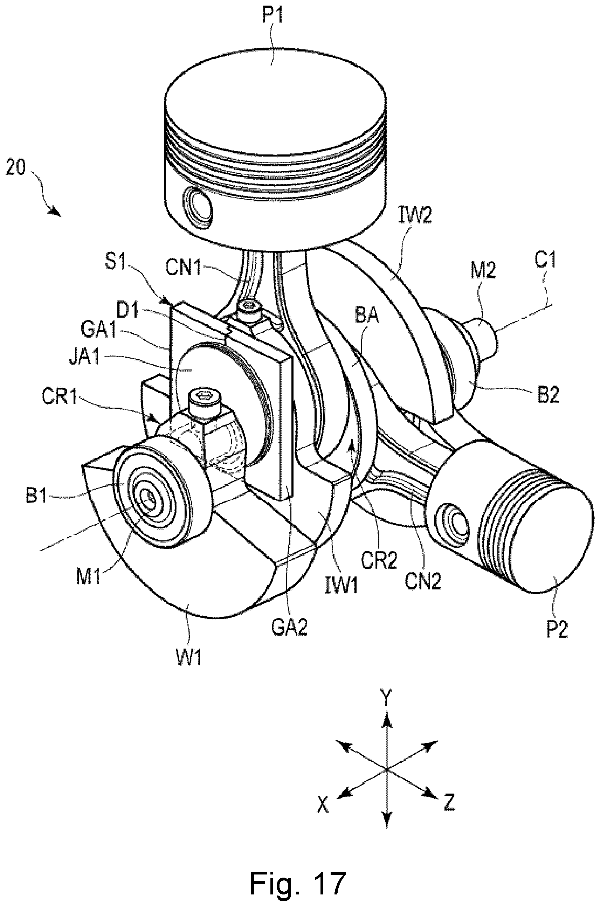

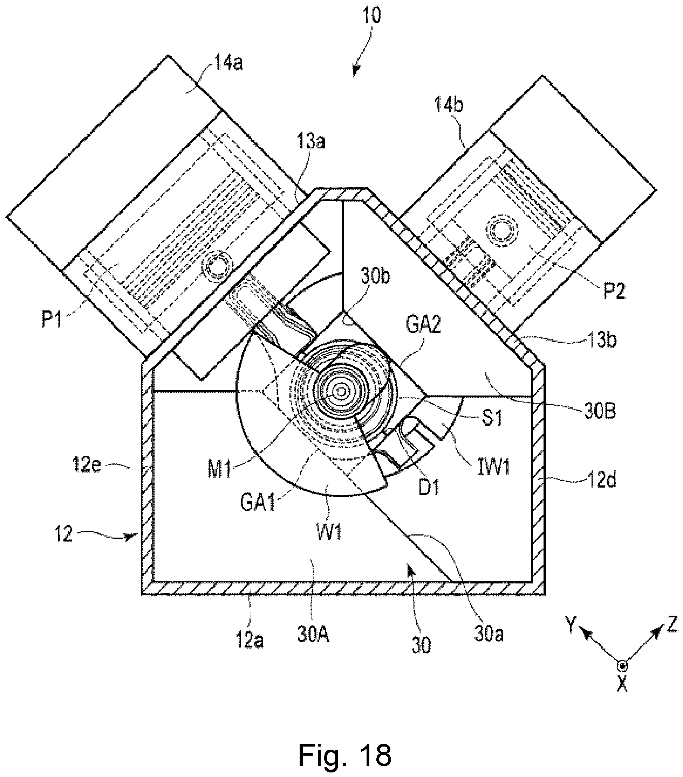

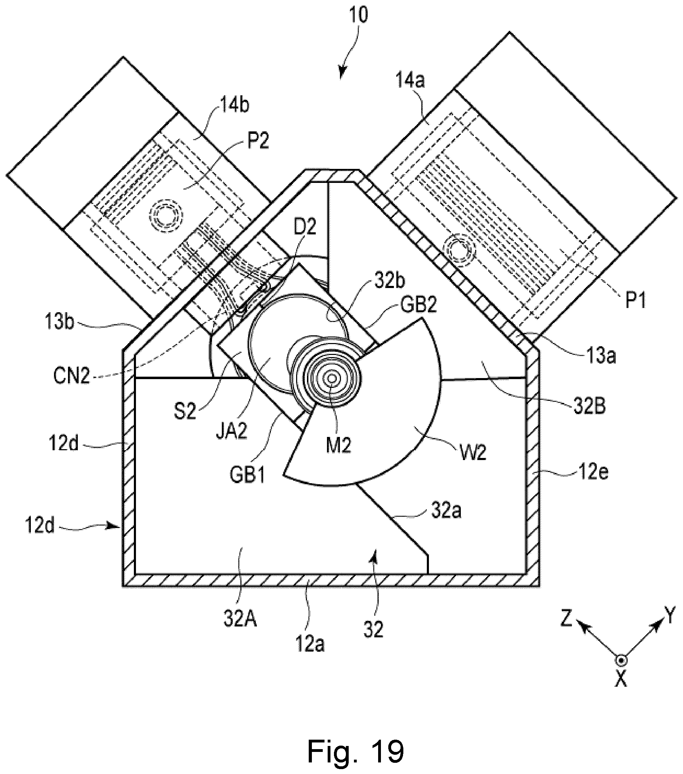

Fig. 16 is a perspective view showing a drive mechanism of a drive device according to a sixth embodiment. Fig. 17 is a perspective view showing the drive mechanism viewed from a different direction. Fig. 18 is a side view showing the drive device according to the sixth embodiment viewed from one side thereof, the case of the drive device being partially taken away. Fig. 19 is a side view showing the drive device according to the sixth embodiment viewed from the other side thereof, the case of the drive device being partially taken away. According to the sixth embodiment, the sliders having an annular shape are replaced with sliders S1 and S2 having a different shape, or specifically a rectangular shape in this case.

As shown in Figs. 17 and 18, the first slider S1 is formed of a rectangular plate and has a circular inner hole and four mutually orthogonal side surfaces. The circular inner hole receives the first journal portion JA1 of the second crankshaft CR2 fitted therein. Two of the four side surfaces, which are parallel and opposed to each other and extend linearly in the Y direction, constitute a pair of guide surfaces GA1 and GA2 of the first slider S1. According to this embodiment, the first slider S1 is dividable into two parts at the position of the dividing surface D1 extending in the Y direction. The dividing surface D1 is an irregular surface having irregularities arranged in the X direction. When the two parts are assembled together with the dividing surfaces joined to each other, the two parts are prevented from shifting in the X direction. The first slider S1 is attached to the outer peripheral surface of the first journal portion JA1 via a bearing and is located in a plane orthogonal to the central axis of the first journal portion JA1. As shown in Fig. 18, the first slider S1 is located between the guide plates 30A and 30B of the first guide 30. The first slider S1 is sandwiched between the guide surfaces 30a and 30b. The guide surfaces GA1 and GA2 of the first slider S1 are in contact with the guide surfaces 30a and 30b, respectively. Thus, during the linear motion of the first slider S1 in the Y direction, the first slider S1 is guided in the Y direction by the guide surfaces 30a and 30b.

As shown in Figs. 16 and 19, the second slider S2 is formed of a rectangular plate. The second slider S2 has a circular inner hole and four mutually orthogonal side surfaces. The circular inner hole receives the second journal portion JA2 of the second crankshaft CR2 fitted therein. Two of the four side surfaces, which are parallel and opposed to each other and extend linearly in the Z direction, constitute a pair of guide surfaces GB1 and GB2 of the second slider S2. According to this embodiment, the second slider S2 is dividable into two parts at the position of the dividing surface D2 extending in the Z direction. The dividing surface D2 is an irregular surface having irregularities arranged in the X direction. When the two parts are assembled together with the dividing surfaces joined to each other, the two parts are prevented from shifting in the X direction. The second slider S2 is attached to the outer peripheral surface of the second journal portion JA2 via a bearing and is located in a plane orthogonal to the central axis of the second journal portion JA2.

As shown in Fig. 19, the second slider S2 is located between the guide plates 32A and 32B of the second guide 32. The second slider S2 is sandwiched between the guide surfaces 32a and 32b. The guide surfaces GB1 and GB2 of the second slider S2 are in contact with the guide surfaces 32a and 32b, respectively. Thus, during the linear motion of the second slider S2 in the Z direction, the second slider S2 is guided in the Z direction by the guide surfaces 32a and 32b.

In the sixth embodiment described above, the other components in the drive mechanism 20 are the same as those in the drive mechanism 20 according to the first embodiment described above. The sixth embodiment produces the same effects as the first embodiment. Furthermore, since the sliders are dividable, the sliders can be assembled more easily. The sliders can have any shapes other than a rectangle as long as they have two side surfaces (guide surfaces) parallel and opposed to each other.

### <Variation of Guide Plates>

A variations of the guide plates will now be described with reference to Figs. 6 and 7. The first guide 30 is configured to guide the linear motion of the first slider S1 in the Y direction. The first guide 30 includes the guide plates 30A and 30B. The guide plate 30A is erected substantially vertically on the bottom wall 12a and the side wall 12e of the case 12. The guide plate 30B is erected substantially vertically on the second ceiling wall 13b and the third side wall 12d of the case 12. The second guide 32 is configured to guide the linear motion of the second slider S2 in the Z direction. The second guide 32 includes the guide plates 32A and 32B. The guide plate 32A is erected substantially vertically on the bottom wall 12a and the side wall 12d of the case 12. The guide plate 32B is erected substantially vertically on the first ceiling wall 13a and the fourth side wall 12e of the case 12.

The guide plates 30A and 30B and guide plates 32A and 32B relating to the above-described embodiments are integrated with the case 12. For example, at least one guide plate selected from among the guide plates 30A, 30B, 32A and 32B may be a separate part from the case 12, and the separate part may be detachably fastened onto the case 12 using a bolt or the like.

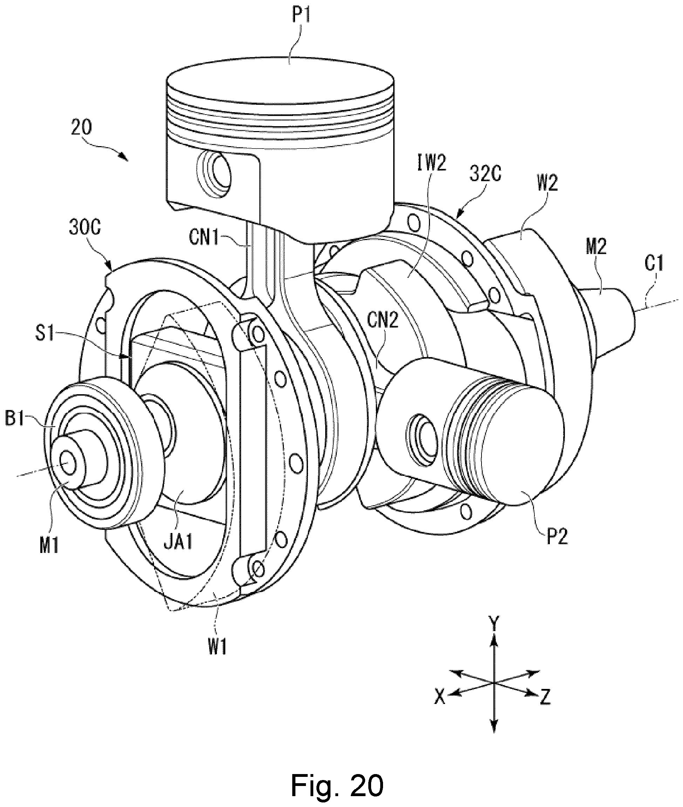

Figs. 20 to 23 show an example case where guide plates 30C and 32C are provided as separate parts from the case 12. Figs. 20 to 23 may show only either the guide plate 30C or 32C. In this case, the relating description is made with reference to the shown one of the guide plates, but the other guide plate is configured in the same manner.

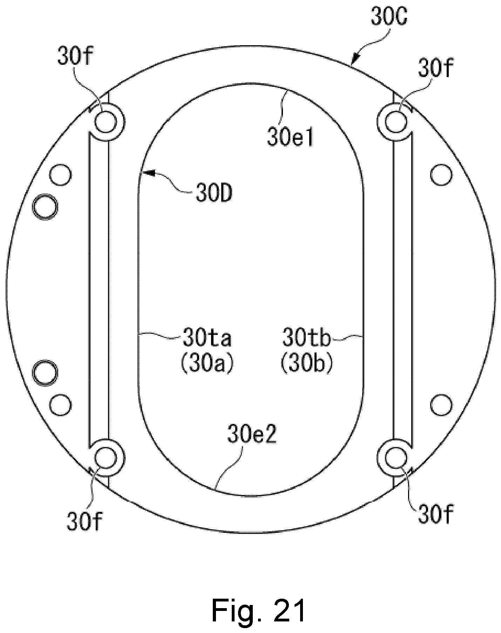

Referring to Figs. 20 and 21, for example, the guide plates 30A and 30B are replaced with a single element or a guide member 30C having a circular outer periphery when seen in the axial direction of the rotational shaft including the main shafts M1 and M2.

The guide member 30C has a guide hole 30D shaped like an elongated circle that is longer in one direction (the Y direction or the top-bottom direction in the drawings) when seen in the axial direction of the rotational shafts. The peripheral edge of the guide hole 30D has a pair of straight portions 30ta and 30tb facing each other in the transverse direction (the Z direction or the left-right direction in the drawings). The straight portions 30ta and 30tb serve as the guide surfaces 30a and 30b described above. Within the entire length of the straight portions 30ta and 30tb, the first slider S1 is allowed to move linearly.

The peripheral edge of the guide hole 30D has a pair of circular arc portions 30e1 and 30e2 facing each other in the longitudinal direction. The circular arc portions 30e1 and 30e2 are positioned outside the region within which the first slider S1 can linearly move. For example, the guide member 30C has four fastening portions 30f. The four fastening portions 30f are located near the opposite ends of the circular arc portions 30e1 and 30e2 of the guide hole 30D facing each other in the transverse direction. Specifically, two of the four fastening portions 30f are located near the opposite ends of the circular arc portion 30e1, and the remaining two fastening portions 30f are located near the opposite ends of the circular arc portion 30e2. The four fastening portions 30f are used to secure the guide member 30C to the case 12. The fastening portions 30f are removably secured to the case 12 using bolts extending along the axial direction of the rotational shafts. Specifically, the case 12 has four fastening sites that correspond one-to-one to the four fastening portions 30f. The four fastening portions 30f are removably secured to the four fastening sites such that one fastening portion 30f corresponds to one fastening site.

The drive device 10 relating to the present variation includes: the case 12; the first crankshaft CR1; and the second crankshaft CR2. The first crankshaft CR1 includes the main shafts M1 and M2; and the eccentric shaft M3. The main shafts M1 and M2 have the first central axis C1, and the eccentric shaft M3 has the second central axis C2 parallel to the first central axis C1. The eccentric shaft M3 is shifted from the main shafts M1 and M2. The respective ends of the main shafts M1 and M2 in the axial direction are supported by the case 12 such that the main shafts M1 and M2 can rotate on the first central axis C1. The second crankshaft CR2 is supported by the eccentric shaft M3 such that the second crankshaft CR2 can rotate on the second central axis C2. The second crankshaft CR2 includes the first and second journal portions JA1 and JA2 having the central axis shifted from the second central axis C2 in the opposite directions. The drive device 10 also includes: the first slider S1 rotatably provided on the first journal portion JA1; the second slider S2 rotatably provided on the second journal portion JA2; the first moving unit (the first piston P1 and connecting rod CN1) rotatably connected to the first journal portion JA1 and configured to perform linear motion in the first direction (Y direction) orthogonal to the first central axis C1 as the first journal portion JA1 moves; the first guide 30 provided on the case 12 and configured to guide movement of the first slider S1 along the first direction; and the second guide 32 provided on the case 12 and configured to guide movement of the second slider S2 along the second direction (Z direction), the second direction being orthogonal to the first central axis C1 and to the first direction. At least one of the first guide 30 or the second guide 32 is a separate part from the case 12 that may be detachably fastened onto the case 12 using a bolt.

The straight portions 30ta and 30tb of the first guide 30 receive little load as the first slider S1 moves but does receive load produced by the movement of the second slider S2, which may cause friction and rattling. The same problem arises for the second guide 32. According to the above configuration, the first guide 30, which can guide the movement of the first slider S1, is a separate part from the case 12. The first guide 30 is detachably fastened onto the case 12 using a bolt. The first guide 30 is thus replaceable when it is worn, damaged or the like, so that the first slider S1 can remain capable of moving smoothly. The drive device relating to the variation can thus meet such demand that long-term smooth operation may be assured even with a complex mechanism such as the two-axis oscillating linear drive mechanism 20.

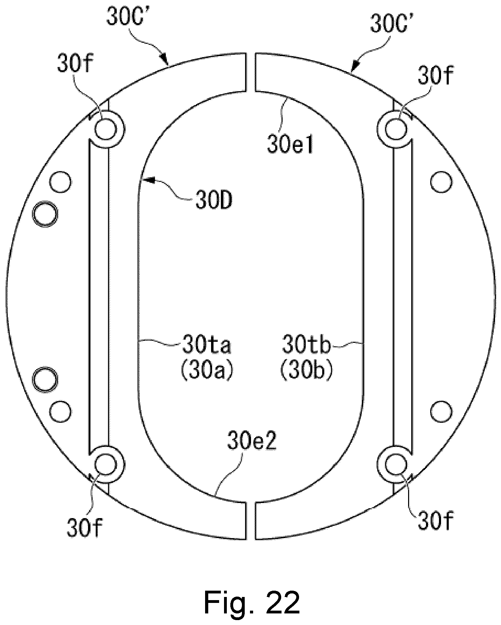

Fig. 22 shows a guide member 30C' different from the guide member 30C shown in Fig. 21. The guide member 30C' has two separatable segments arranged next to each other in the transverse direction (the Z direction, the left-right direction in the drawing). The guide member 30C' can be readily manufactured since each segment can have a reduced size. Furthermore, the guide member 30C' can be assembled by arranging its separatable segments such that they sandwich the first slider S1. The guide member 30C' can be assembled in a more flexible manner.

The guide member 30C, 30C' is secured onto the case 12 using a bolt extending along the axial direction. Therefore, repeated load inputs from the first slider S1 to the guide surfaces 30a and 30b may create a gap between the guide member 30C, 30C' and the case 12 along the fastening surface. The bolt keeps receiving vertical load and may eventually get damaged.

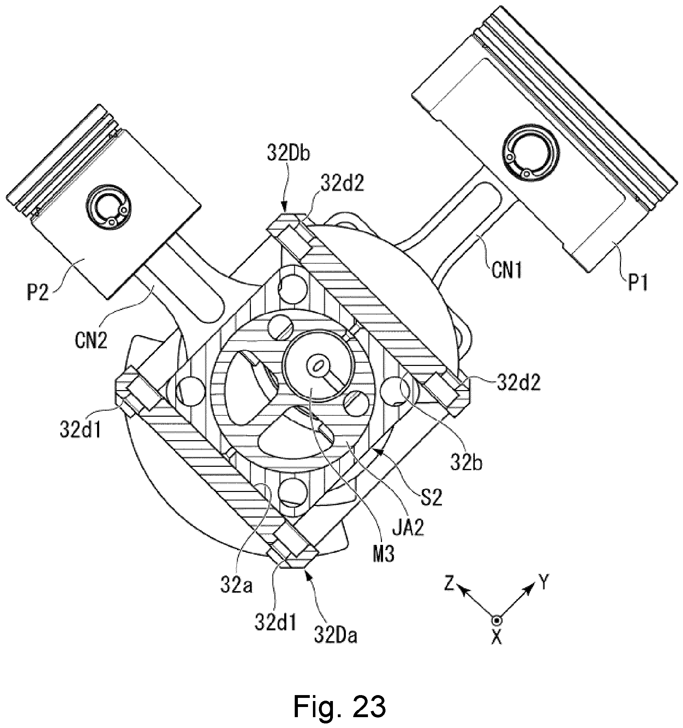

To address this issue, guide members 32Da and 32Db shown in Fig. 23 may be proposed. The guide members 32Da and 32Db are secured onto the case 12 using bolts extending vertically to the axial direction (more specifically, bolts perpendicular to the guide surfaces 32a and 32b). For convenience of illustration in Fig. 23, the guide members 32Da and 32Db are shown in Fig. 23 that are configured to guide the movement of the second slider S2, but the guide members for guiding the first slider S1 also have the same configuration.

In this case, load is applied from the second slider S2 to the guide surfaces 32a and 32b in a direction parallel to the axial direction of the bolts. This can prevent load from acting vertically on to the bolts. The guide members 32Da and 32Db butt up against the respective fastening surfaces of the case 12 in the axial direction of the bolts (in which load is input into the guide surfaces 32a and 32b), so that the vertical load applied to the guide surfaces 32a and 32b can be accommodated. In this way, no vertical load is input into the bolts, which can prevent the bolts from breaking down.

The fastening portions 32d1 and 32d2 of the guide members 32Da and 32db have a bolt insertion hole. The bolt insertion holes are open at the guide surfaces 32a and 32b or extensions thereof. The bolt insertion holes have counter boring at the guide surfaces 32a and 32b where the heads of the bolts can rest. This can result in preventing interference between the second slider S2 and the bolts. There is no offset in the X direction between (i) the guide surfaces 32a and 32b and (ii) the bolts. The second slider S2 may apply load to the guide surfaces 32a and 32b, but the guide members 32Da and 32Db will not collapse in the X direction.

### <Variation of Slider>

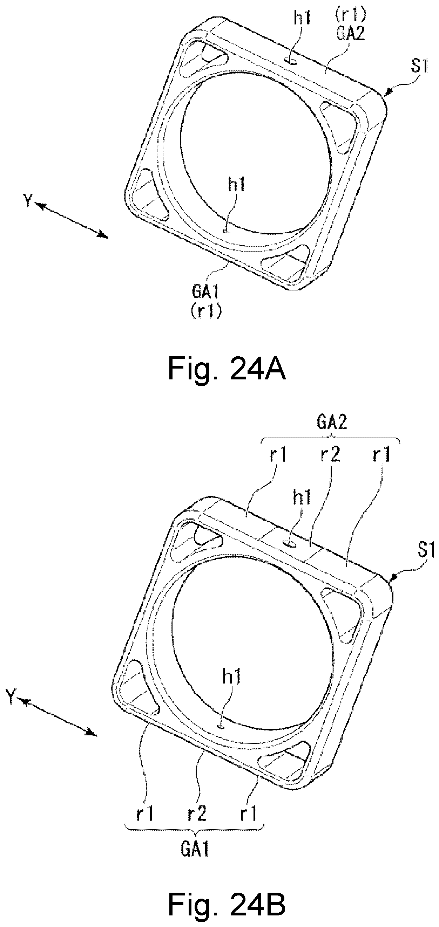

As shown in Fig. 24A, the first slider S1 relating to the sixth embodiment is formed of a rectangular plate. Although not shown in Fig. 24A, the second slider S2 is configured in the same manner. The first slider S1 has four side surfaces arranged orthogonally to each other. Two of the four side surfaces that extend along the Y direction serve as the guide surfaces GA1 and GA2 of the first slider S1. The guide surfaces GA1 and GA2 extending in the Y direction have a slider oil hole h1 in the middle portion. The slider oil hole h1 penetrates in the radial direction through the first slider S1. The slider oil hole h1 extends to reach the inner hole where the first journal portion JA1 is mated. The slider oil hole h1 can allow lubricating oil to flow from the region where the first journal portion JA1 is provided toward the guide surfaces GA1 and GA2. The first slider S1 has a total length of about 100 mm in the Y and Z directions, and a thickness of about 30 mm in the X direction (axial direction). As for the above-described features, the first slider S1 is configured in the same manner as in the sixth embodiment.

According to the variation, the guide surfaces GA1 and GA2 of the first slider S1 extending in the Y direction have a convex curvature (a radius of about 800 mm) on the outer circumference when viewed in the axial direction. In other words, the guide surfaces GA1 and GA2 of the first slider S1, which face each other in the width direction orthogonal to the direction in which the first slider S1 is movable, has an arc-shaped portion r1 having a convex curvature on the outer circumference in the width direction.

The drive device 10 relating to the present variation includes: the case 12; the first crankshaft CR1; and the second crankshaft CR2. The first crankshaft CR1 includes the main shafts M1 and M2; and the eccentric shaft M3. The main shafts M1 and M2 have the first central axis C1, and the eccentric shaft M3 has the second central axis C2 parallel to the first central axis C1. The eccentric shaft M3 is shifted from the main shafts M1 and M2. The respective ends of the main shafts M1 and M2 in the axial direction are supported by the case 12 such that the main shafts M1 and M2 can rotate on the first central axis C1. The second crankshaft CR2 is supported by the eccentric shaft M3 such that the second crankshaft CR2 can rotate on the second central axis C2. The second crankshaft CR2 includes the first and second journal portions JA1 and JA2 having the central axis shifted from the second central axis C2 in the opposite directions. The drive device 10 also includes: the first slider S1 rotatably provided on the first journal portion JA1; the second slider S2 rotatably provided on the second journal portion JA2; the first moving unit (the first piston P1 and connecting rod CN1) rotatably connected to the first journal portion JA1 and configured to perform linear motion in the first direction (Y direction) orthogonal to the first central axis C1 as the first journal portion JA1 moves; the first guide 30 provided on the case 12 and configured to guide movement of the first slider S1 along the first direction; and the second guide 32 provided on the case 12 and configured to guide movement of the second slider S2 along the second direction (Z direction), the second direction being orthogonal to the first central axis C1 and to the first direction. At least one of the first slider S1 or the second slider S2 is shaped like a plate the thickness direction of which extends along the axial direction, and has a pair of lateral portions (the guide surfaces GA1 and GA2) extending along the direction in which the slider can move and facing each other in the width direction orthogonal to the direction in which the slider can move as viewed in the axial direction. The lateral portions each have an arc-shaped portion r1 having a convex curvature on the outer side in the width direction. The arc-shaped portion r1 represents a portion of the slider that has a reasonably small curvature, unlike the rounded corners of the first slider S1.

In this manner, the guide surfaces GA1 and GA2 of the first slider S1 establish a contact with the guide surfaces 30a and 30b of the first guide 30 in a reduced area, when compared to the case where the guide surfaces GA1 and GA2 extend linearly when seen in the axial direction. The contact resistance between the first slider S1 and the first guide 30 may result in the drive mechanism 20 malfunctioning, but the above-described variation can solve this issue. The drive device relating to the variation can thus meet such demand that long-term smooth operation may be assured even with a complex mechanism such as the two-axis oscillating linear drive mechanism 20.

Fig. 24B shows another variation of the first slider S1. According to this variation, the guide surfaces GA1 and GA2 of the first slider S1 have an arc-shaped portion r1 with a convex curvature (800 mm radius) on the outer circumference when seen in the axial direction and a straight portion (flat portion) r2 extending along the Y direction. The straight portion r2 occupies the middle portion including the middle of the arc-shaped portion r1 in the Y direction.

According to this variation, the guide surfaces GA1 and GA2 each have arc-shaped portions r1 at the opposite ends facing each other in the Y direction. This can effectively reduce the area of contact between the guide surfaces GA1 and GA2 of the first slider S1 and the guide surfaces 30a and 30b of the first guide 30. On the other hand, the guide surfaces GA1 and GA2 each have the flat straight portion r2 in the middle region in the Y direction. This makes it easy to keep an oil film between the guide surfaces GA1 and GA2 of the first slider S1 and the guide surfaces 30a and 30b of the first guide 30, thereby facilitating the movement of the first slider S1. The guide surfaces GA1 and GA2 have an oil hole h1 in the middle region in the Y direction. The lubricating oil can be thus smoothly supplied, which also contributes to smooth movement of the first slider S1.

For example, there is a gap between (i) the guide surfaces GA1 and GA2 of the first slider S1 and (ii) the guide surfaces 30a and 30b of the first guide 30. The minimum value of the gap is greater than the maximum tolerance of the shift of the first journal portion JA1 of the second crankshaft CR2 (indicating the distance between the central axis lines C2 and CG1). The contact resistance between the first slider S1 and the first guide 30 may result in the drive mechanism 20 malfunctioning, but the above-described variation can also solve this issue.

### <Variation of Journal Portions>

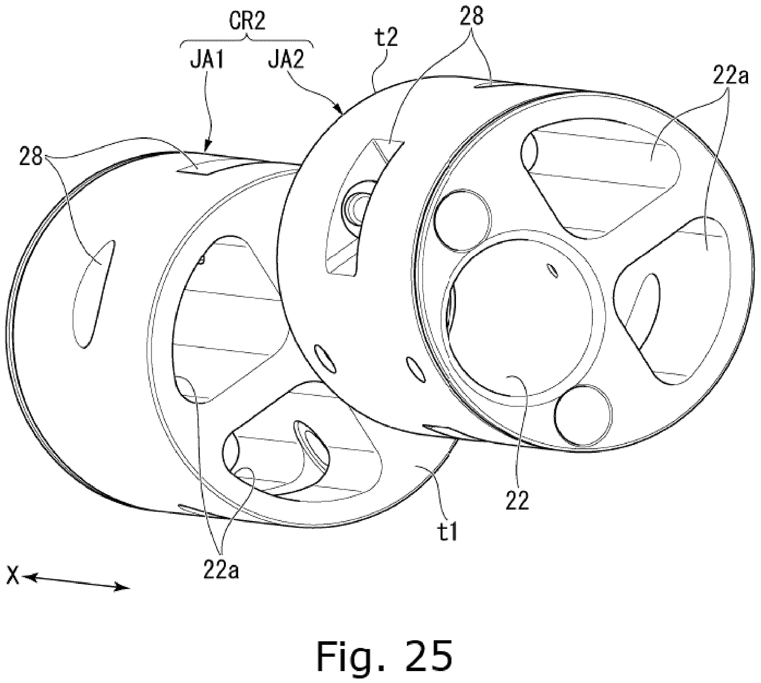

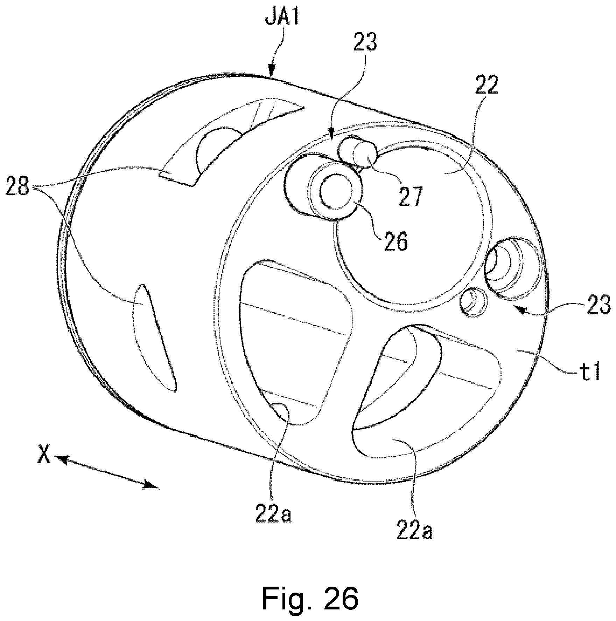

Figs. 25 and 26 show a variation of the first and second journal portions JA1 and JA2 (a variation of the second crankshaft CR2). The features of the first journal portion JA1 shown in Fig. 26 can be also seen in the second journal portion JA2. The first and second journal portions JA1 and JA2 are separate from each other and shaped like a circular cylinder.

While the above-described embodiments have the disk-shaped base portion BA between the first and second journal portions JA1 and JA2 in the axial direction (see Fig. 3), this variation is practiced without the base portion BA. The first journal portion JA1 has an inner end surface t1 facing inward in the axial direction of the second crankshaft CR2. The second journal portion JA2 has an inner end surface t2 facing inward in the axial direction of the second crankshaft CR2. According to the present variation, the inner end surfaces t1 and t2 butt up against each other and are coupled.

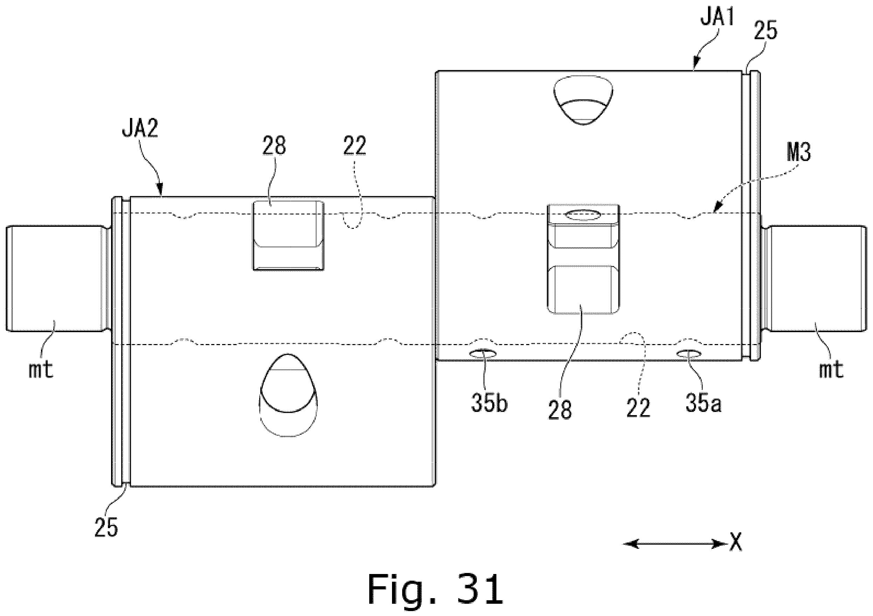

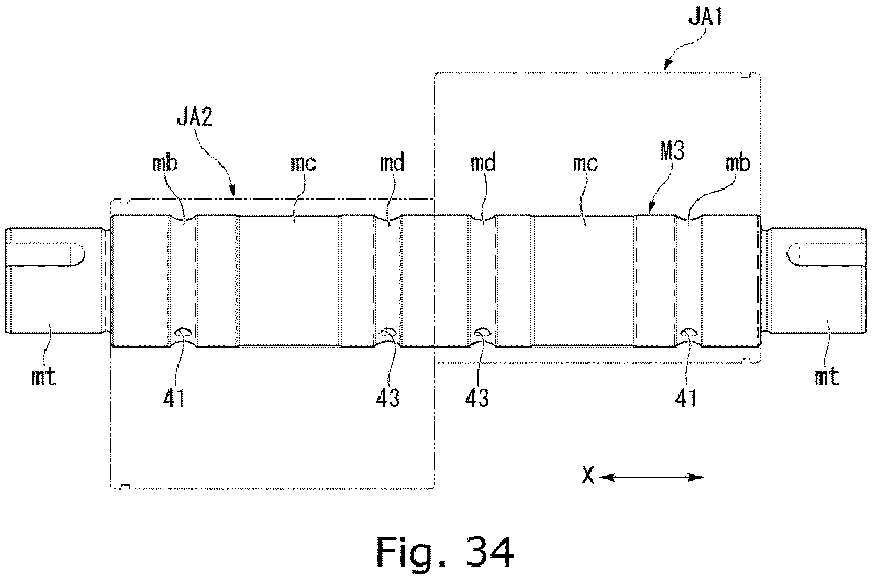

The following description is made with reference to Figs. 31 to 34. The first and second journal portions JA1 and JA2 have a perforation 22 penetrating therethrough, and the rod-shaped eccentric shaft M3 is inserted into the perforation 22. The respective central axis lines (the central axis lines CG1 and CG2) of the first and second journal portions JA1 and JA2 are offset toward opposite sides by the same amount from the central axis line of the eccentric shaft M3 (the second central axis line C2) in the shift direction orthogonal to the second central axis line C2. In the following description, the term "shift orthogonal direction" represents the direction orthogonal to the axial direction and to the shift direction. For example, as shown in Figs. 25 and 26, the first and second journal portions JA1 and JA2 each have a pair of downgauging holes 22a in the region opposite to the perforation 22 in the shift direction. The downgauging holes 22a have a fan shape as viewed in the axial direction. The downgauging holes 22a are arranged across the center in the shift orthogonal direction.

The first and second journal portions JA1 and JA2 each have coupling portions 23. In each of the first and second journal portions JA1 and JA2, the coupling portions 23 sandwich the perforation 22 in the shift orthogonal direction. The coupling portions 23 can be used to couple the first and second journal portions JA1 and JA2. In each of the first and second journal portions JA1 and JA2, one of the coupling portions 23 in the shift orthogonal direction constitutes a bolt insertion hole extending along the axial direction, and the other of the coupling portions 23 in the shift orthogonal direction constitutes a nut hole extending along the axial direction.

The bolt insertion hole and nut hole of the coupling portions 23 have a counterbore depressed from the inner end surface t1 of the first journal JA1, and also have a counterbore of the same diameter depressed from the inner end surface t2 of the second journal JA2. A collar 26 shaped like a circular cylinder is inserted into the counterbores that oppose each other in the axial direction. Adjacent to the bolt insertion hole and nut hole are knock holes into which knock pins 27 are inserted. The first and second journal portions JA1 and JA2 have work holes on the opposite side surface in the axial direction to the side surface where the bolt insertion hole and nut hole are open. The work holes are used to work on the bolt insertion and nut holes. The work holes allow a connecting bolt to be inserted into the bolt insertion holes.

The first and second journal portions JA1 and JA2 can be coupled by inserting the collar 26 and knock pins 27 into the inner end surface t1 or the inner end surface t2 and subsequently arranging the first and second journal portions JA1 and JA2 such that the inner end surfaces t1 and t2 face and butt up against each other. This allows the collar 26 and knock pins 27 to be inserted into the counterbores and knock holes on the opposite inner end surface in the axial direction. In this way, the first and second journal portions JA1 and JA2 can be aligned relative to each other. On completion of the relative alignment, a connecting bolt is inserted into the bolt insertion hole of the first or second journal portion JA1 or JA2, and then screwed and secured into the nut hole of the other journal portion. As a result, the first and second journal portions JA1 and JA2 can be connected as a single unit in the axial direction.

The first and second journal portions JA1 and JA2 each have a pair of weight coupling portions 28 in the middle portion in the axial direction. The weight coupling portions 28 sandwich the middle point of the journal portion in the shift orthogonal direction. The weight coupling portions 28 are designed to allow the separate inner counterweights IW1 and IW2 to be mounted on the journal portion. The weight coupling portions 28 have a bolt insertion hole extending parallel to the shift direction, and depressed portions notched into the outer surface of the corresponding journal portion and sandwiching the bolt insertion hole.

The drive device 10 relating to the present variation includes: the case 12; the first crankshaft CR1; and the second crankshaft CR2. The first crankshaft CR1 includes the main shafts M1 and M2; and the eccentric shaft M3. The main shafts M1 and M2 have the first central axis C1, and the eccentric shaft M3 has the second central axis C2 parallel to the first central axis C1. The eccentric shaft M3 is shifted from the main shafts M1 and M2. The respective ends of the main shafts M1 and M2 in the axial direction are supported by the case 12 such that the main shafts M1 and M2 can rotate on the first central axis C1. The second crankshaft CR2 is supported by the eccentric shaft M3 such that the second crankshaft CR2 can rotate on the second central axis C2. The second crankshaft CR2 includes the first and second journal portions JA1 and JA2 having the central axis shifted from the second central axis C2 in the opposite directions. The drive device 10 also includes: the first slider S1 rotatably provided on the first journal portion JA1; the second slider S2 rotatably provided on the second journal portion JA2; the first moving unit (the first piston P1 and connecting rod CN1) rotatably connected to the first journal portion JA1 and configured to perform linear motion in the first direction (Y direction) orthogonal to the first central axis C1 as the first journal portion JA1 moves; the first guide 30 provided on the case 12 and configured to guide movement of the first slider S1 along the first direction; and the second guide 32 provided on the case 12 and configured to guide movement of the second slider S2 along the second direction (Z direction), the second direction being orthogonal to the first central axis C1 and to the first direction. The first and second journal portions JA1 and JA2 are separate from each other and can be connected as a single unit in the axial direction to constitute the second crankshaft CR2.

According to the variation, the first and second journal portions JA1 and JA2, which are separate from each other, can be connected in the axial direction to constitute the second crankshaft CR2. The first and second journal portions JA1 and JA2 can be thus manufactured and processed in a facilitated manner. The first and second journal portions JA1 and JA2 are coupled by fastening them with bolts extending along the axial direction, with the collars 26 and knock pins 27 extending along the axial direction achieving relative alignment between the first and second journal portions JA1 and JA2. The second crankshaft CR2 can be thus assembled in a more facilitated manner. The drive device relating to the variation can thus meet such demand that simplified manufacturing and assembling may be assured even with a complex mechanism such as the two-axis oscillating linear drive mechanism 20.

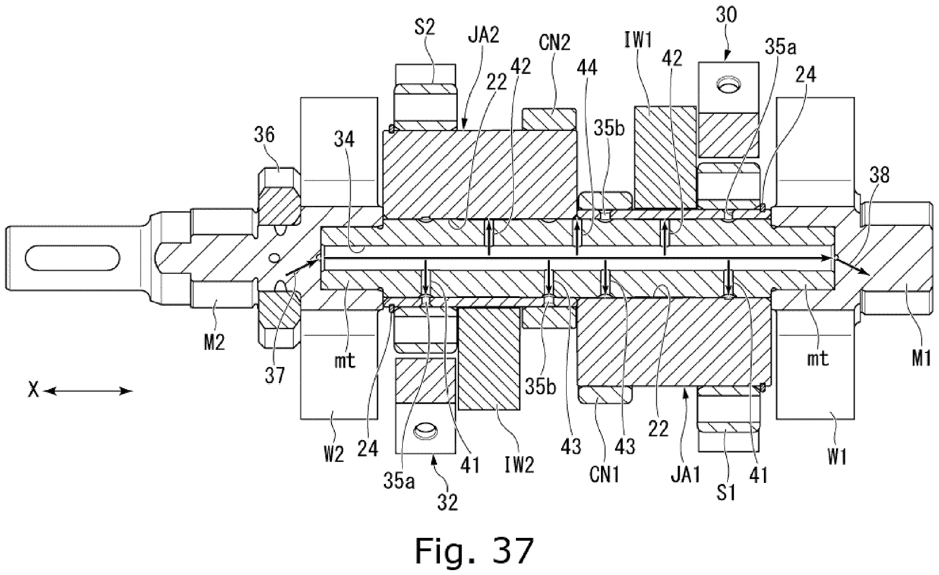

The following description is made with reference to Fig. 37. The second crankshaft CR2 has the perforation 22 extending through the first and second journal portions JA1 and JA2 in the axial direction. The perforation 22 receives therein the rod-shaped and separately prepared eccentric shaft M3, for example. The respective ends of the eccentric shaft M3 in the axial direction constitute protruding shafts mt protruding outward in the axial direction beyond the first and second journal portions JA1 and JA2. The protruding shafts mt respectively have the first and second counterweights W1 and W2 attached thereto. In this variation, the first and second counter weights W1 and W2 are separate parts from the eccentric shaft M3.

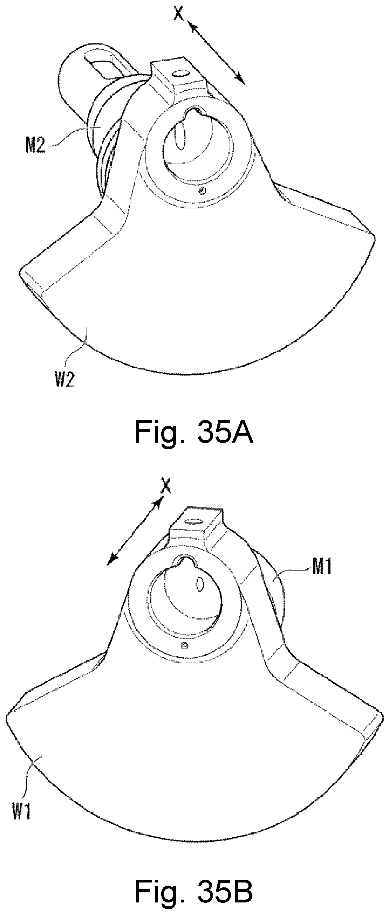

The following description is made also with reference to Figs. 35A and 35B. Each of the first and second counterweights W1 and W2 is integrated with a corresponding one of the main shafts M1 and M2 that is located on the same side in the axial direction. Each of the first and second counterweights W1 and W2 is integrally coupled with one of the protruding shafts mt that is located on the same side in the axial direction via a non-turn pin extending along the axial direction and a fixation bolt extending along the radial direction. The drive device relating to the variation can thus meet such demand that simplified manufacturing and assembling may be assured even with a complex mechanism such as the two-axis oscillating linear drive mechanism 20.

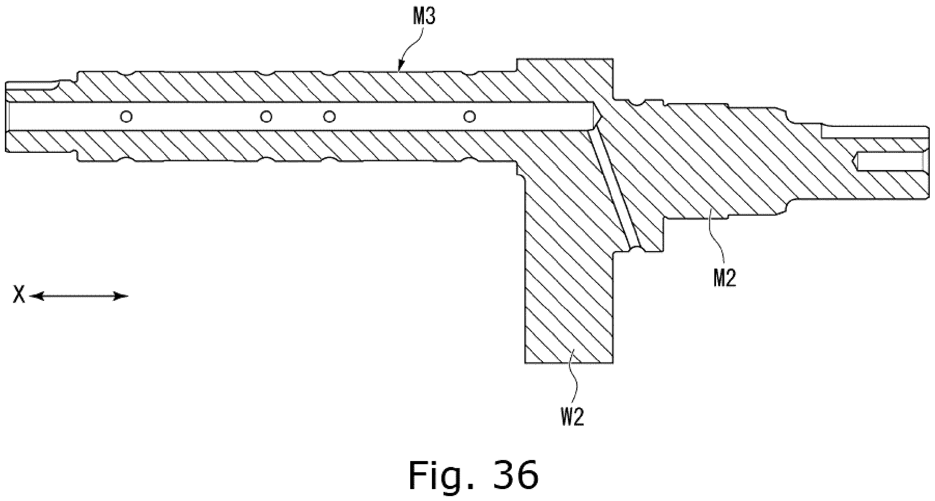

In this variation, the first and second counterweights W1 and W2 are both separate parts from the eccentric shaft M3. According to another variation, as shown in Fig. 36, the first or second counterweight W1 or W2 (in the drawing, the second counterweight W2) may be integrated with (integrated with and made of the same material as) the eccentric shaft M3.

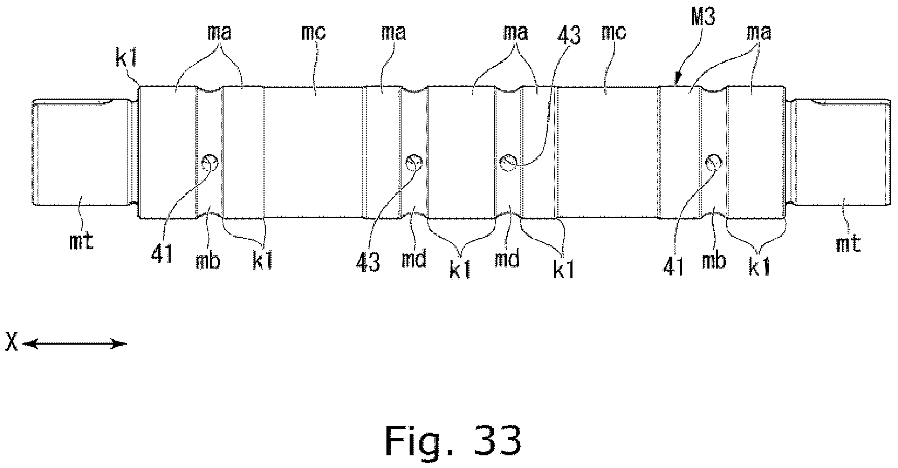

The following description is made with reference to Figs. 31 and 33. The outer circumference of the eccentric shaft M3 has shaft outer surfaces ma, oil grooves mb and md, and dented portions mc. The shaft outer surfaces ma are in contact with the inner peripheral surfaces of the perforations 22 of the first and second journal portions JA1 and JA2. The oil grooves mb and md are recessed inwardly from the shaft outer surfaces ma and are annular. The dented portions mc are flatly recessed from the shaft outer surfaces ma and shallower and wider in the axial direction than the oil grooves mb and md. The protruding shafts mt, which are located on the respective ends of the journal portions in the axial direction, have a smaller diameter than the shaft outer surfaces ma.

Annular corner portions k1 are present in the regions between the shaft outer surfaces ma and the protruding shafts mt, between the shaft outer surfaces ma and the oil grooves mb and md, and between the shaft outer surfaces ma and the dented portions mc. The corner portions k1 are beveled in a tapered manner so that they are inclined with respect to the axial and radial directions. The first and second journal portions JA1 and JA2 are dividable. If the perforations 22 of the first and second journal portions JA1 and JA2 are misaligned at the respective and opposing inner end surfaces t1 and t2, the corner portions k1 of the outer periphery of the eccentric shaft M3 are likely to get obstructed by the opening edges of the perforations 22. This makes it difficult to assemble the second crankshaft CR2.

According to the present variation, the corner portions k1 of the eccentric shaft M3 are beveled, so that the corner portions k1 of the eccentric shaft M3 are less likely to get obstructed by the opening edges of the perforations 22. The size of the beveling is approximately double the tolerance of the center of the perforations 22 of the first and second journal potions JA1 and JA2, for example. In this manner, the corner portions k1 of the eccentric shaft M3 is unlikely to get obstructed even if the central axes of the perforations 22 are misaligned to the maximum extent. Like the corner portions k1, the opening edges k2 of the perforations 22 of the first and second journal portions JA1 and JA2 that face outside in the axial direction of the second crankshaft CR2 are beveled in a tapered manner so that they are inclined with respect to the axial and radial directions. The opening edges K3 of the perforations 22 of the first and second journal portions JA1 and JA2 that face inside and each other in the axial direction of the second crankshaft CR2 may be also beveled in the same manner.

### <Variation of Internal Counterweight>

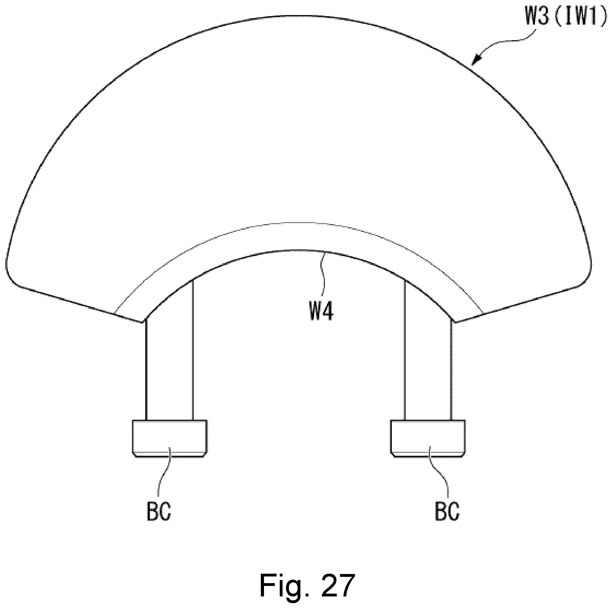

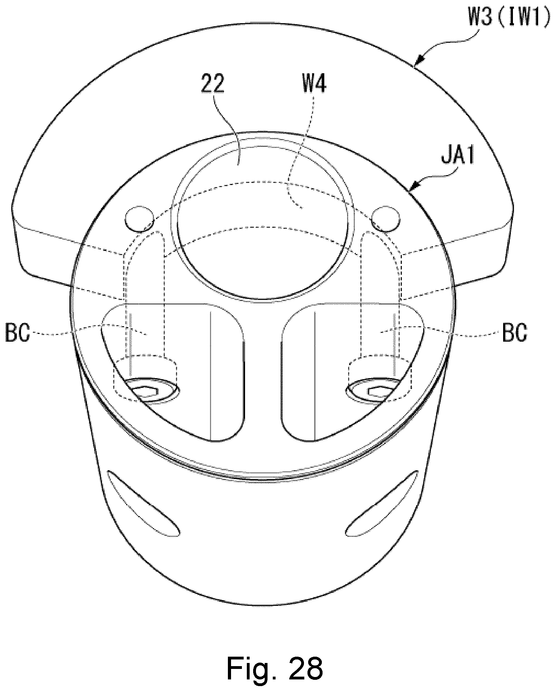

As shown in Figs. 27 and 28, a variation of the first internal counterweight IW1 is a separate part from the first journal portion JA1. Although not shown, a variation of the second internal counterweight IW2 is similarly a separate part from the second journal portion JA2. The following description is made taking the first journal portion JA1 and first internal counterweight IW1 as an example, but also applies to the second journal portion JA2 and second internal counterweight IW2.

The following description refers to the case where the first and second journal portions JA1 and JA2 are shaped like a circular cylinder. In this case, the first and second internal counterweights IW1 and IW2 may need to be provided as separate parts from the corresponding journal portions JA1 and JA2 and subsequently mounted on the corresponding journal portions JA1 and JA2 by means of bolt fastening. In a hypothetical case, a separate counterweight may be mounted on a journal portion by forming an annular member as an integral part of the counterweight. The annular member extends along the entire outer circumference of the journal portion and is fitted into the outer circumference of the journal portion. The annular member, however, does not play a role of a counterweight and may undermine the attempts to reduce the size and weight of the separate counterweight.

The internal counterweight IW1 shown in Figs. 27 and 28 is embodied without such an annular member and only constituted by a fan-shaped eccentric weight (weight body) W3 that protrudes outward beyond the outer surface of the journal portion JA1. In this manner, the separate internal counterweight IW1 achieves a smaller size and a lighter weight. The eccentric weight W3 is secured onto the journal portion JA1 using a pair of coupling bolts BC, which is provided correspondingly to the above-mentioned pair of weight coupling portions 28. The internal counterweight IW1 has a circular arc portion W4 extending along the outer surface of the journal portion JA1. The circular arc portion W4 does not extend along the entire outer surface of the journal portion JA1. The internal counterweight IW1 establishes a contact with the journal portion JA1 only in a region occupied by the eccentric weight W3 in the circumferential direction. In the remaining region in the circumferential direction, the internal counterweight IW1 has a free portion. The internal counterweight IW1 is not an annular member extending along the entire circumference of the journal portion JA1. At least part of the internal counterweight IW1 is removed, so that the free portion is provided. In the free portion, the internal counterweight IW1 has no contact with the journal portion JA1.

The drive device 10 relating to the present variation includes: the case 12; the first crankshaft CR1; and the second crankshaft CR2. The first crankshaft CR1 includes the main shafts M1 and M2; and the eccentric shaft M3. The main shafts M1 and M2 have the first central axis C1, and the eccentric shaft M3 has the second central axis C2 parallel to the first central axis C1. The eccentric shaft M3 is shifted from the main shafts M1 and M2. The respective ends of the main shafts M1 and M2 in the axial direction are supported by the case 12 such that the main shafts M1 and M2 can rotate on the first central axis C1. The second crankshaft CR2 is supported by the eccentric shaft M3 such that the second crankshaft CR2 can rotate on the second central axis C2. The second crankshaft CR2 includes the first and second journal portions JA1 and JA2 having the central axis shifted from the second central axis C2 in the opposite directions. The drive device 10 also includes: the first slider S1 rotatably provided on the first journal portion JA1; the second slider S2 rotatably provided on the second journal portion JA2; the first moving unit (the first piston P1 and connecting rod CN1) rotatably connected to the first journal portion JA1 and configured to perform linear motion in the first direction (Y direction) orthogonal to the first central axis C1 as the first journal portion JA1 moves; the first guide 30 provided on the case 12 and configured to guide movement of the first slider S1 along the first direction; and the second guide 32 provided on the case 12 and configured to guide movement of the second slider S2 along the second direction (Z direction), the second direction being orthogonal to the first central axis C1 and to the first direction. The separate internal counterweights IW1 and IW2 are removably mounted onto at least one of the first journal portion JA1 or the second journal portion JA2. The internal counterweights IW1 and IW2 are divided into the circular arc portion W4 and the free portion. The circular arc portion W4 extends along the outer surface of the journal portion in the circumferential direction only in the region occupied by the eccentric weight W3, and the free portion is a vacant space extending in the circumferential direction that is not occupied by the eccentric weight W3.

In this variation, the internal counterweights IW1 and IW2, which are separately provided from the journal portions, touches only part of the outer surface of the journal portions. In the remaining region in the circumferential direction, namely the free region, the internal counterweights IW1 and IW2 do not establish a contact with the journal portions. Accordingly, the internal counterweights IW1 and IW2 provided as separate parts can achieve a smaller size and a lighter weight than the internal counterweights IW1 and IW2 having an annular member mating with the journal portions along the entire circumference. The drive device relating to the variation can thus meet such demand that simplified manufacturing and assembling may be assured even with a complex mechanism such as the two-axis oscillating linear drive mechanism 20.

According to the example shown in Figs. 27 and 28, the circular arc portion W4 of the internal counterweight IW1 constitutes a surface extending along the outer surface of the journal portion JA1 (a surface extending along the circumferential direction). In operation, the drive device 10 may be accelerated or decelerated. If such occurs, the internal counterweight IW1 may accidentally move along the outer surface of the journal portion JA1, which may result in rattling of the internal counterweight IW1 or wearing of the contacting surfaces.

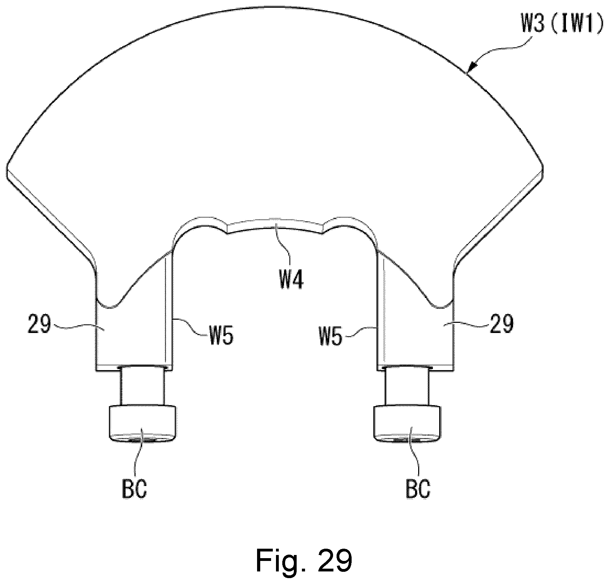

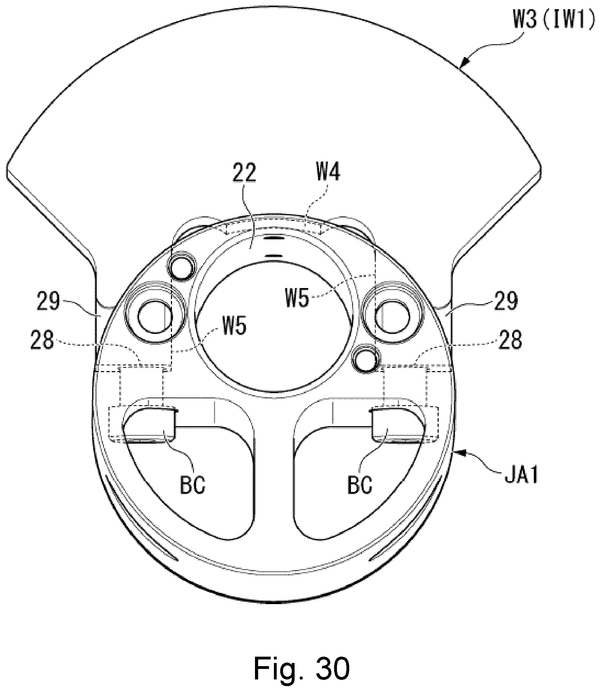

To address this issue, the circular arc portion W4 of the internal counterweight IW1 has legs 29 extending toward the journal portion JA1 along the connecting bolts BC, as shown in the example of Figs. 29 and 30. The legs 29 are inserted into the recesses of the weight coupling portions 28 in the outer periphery of the journal portion JA1. At least one of the internal counterweight IW1 or the journal portion JA1 has a surface W5 extending in such a direction that the surface W5 intersects the circumferential direction of the journal portion JA1. The coupling bolts BC may be tightened so that the counterweight IW1 can remain stationary. In this case, the surface W5 establishes no contact with anything, and the weight coupling portions 28 alone can prevent the counterweights IW1 and IW2 from accidentally moving in the circumferential direction.

The internal counterweight IW1 can be prevented from accidentally moving along the outer surface of the journal portion JA1 even if the drive device 10 is accelerated or decelerated during operation. As a result, the internal counterweight IW1 can be saved from rattling or wearing out. The drive device relating to the variation can thus meet such demand that long-term smooth operation may be assured even with a complex mechanism such as the two-axis oscillating linear drive mechanism 20.

### <How Oil is Supplied in Second Crankshaft>

As shown in Fig. 37, the eccentric shaft M3 of the first crankshaft CR1 is hollow and thus has an internal space extending along the central axis. The internal space in the eccentric shaft M3 may serve as an in-shaft oil channel 34 for feeding a lubricating oil to the movable parts of the second crankshaft CR2. The eccentric shaft M3 has a plurality of oil holes 41 to 44 extending from the in-shaft oil channel 34 outwardly in the radial direction. Through the oil holes 41 to 44, the oil is fed to the movable parts such as the journal portions.

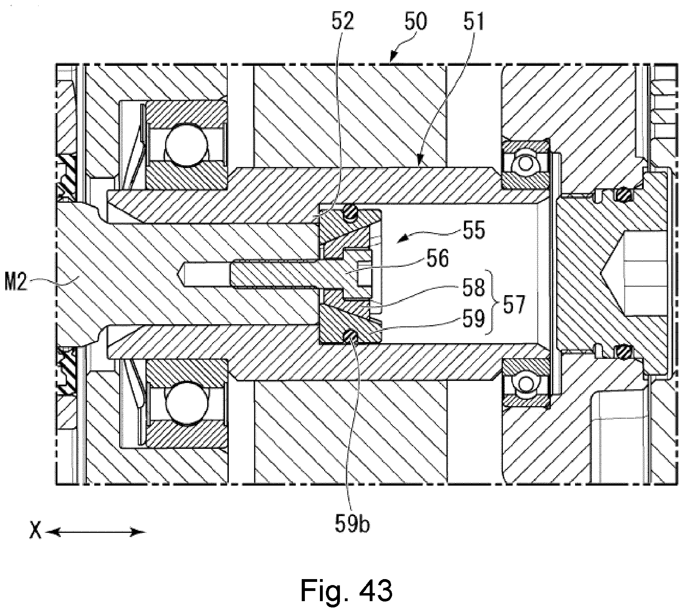

The drive device 10 has an oil pan located below the case 12. The drive device 10 supplies the oil stored in the oil pan to the parts of the drive device 10 to lubricate the moving parts. The main shaft M2, which is located on the left side in Fig. 37, is connected to a drive shaft 51 of an electric motor 50 (see Fig. 43), which is the drive source of the drive device 10. The main shaft M2 has an eccentric shaft 36 at the base end (the end close to the counterweight IW2). The eccentric shaft 36 is arranged such that its axis is shifted from the axis of the main shaft M2. The eccentric shaft 36 can generate a driving force for an oil pump, which is not shown. The oil pump discharges oil, which flows into an oil channel formed in the eccentric shaft 36 and reaches one end of the in-shaft oil channel 34 through an oil inlet 37 that is inclined with respect to the central axis C2. The oil flows through the in-shaft oil channel 34 to the other end and returns to the case 12 through an oil outlet 38 in the counterweight W1, which is located on the right side in Fig. 37.

The following description is made with reference to Fig. 33. The outer periphery of the eccentric shaft M3 has, in addition to the shaft outer surfaces ma, the outer oil grooves mb, the dented portions mc, and the inner oil grooves md, in the stated order from the outside in the axial direction. First oil holes 41 are open at the outer oil grooves mb, second oil holes 42 are open at the dented portions mc, and third oil holes 43 are open at the inner oil grooves md. A fourth oil hole 44 is open at the shaft outer surface ma of the eccentric shaft M3 that is located in the middle in the axial direction.

The shaft outer surfaces ma that are at the respective ends of the eccentric shaft M3 in the axial direction are respectively in contact with the inner peripheral surface of the first journal portion JA1 and the inner peripheral surface of the second journal portion JA2. On the outer periphery of the first and second journal portions JA1 and JA2, the first and second sliders S1 and S2, the first and second internal counterweights IW1 and IW2, and the first and second connecting rods CN1 and CN2 are mounted and arranged in the stated order from the outside in the axial direction of the eccentric shaft M3.

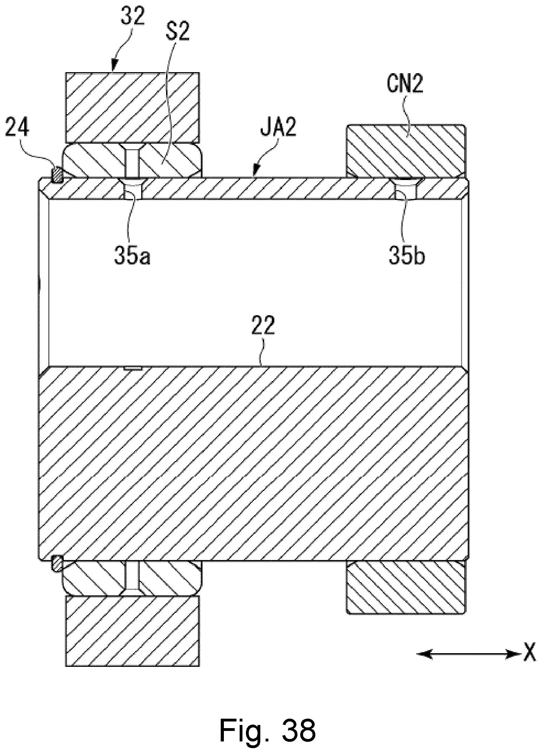

The following description is made with reference to Fig. 38. The first and second journal portions JA1 and JA2 have a plurality of journal oil holes 35a and 35b extending from the perforation 22 to the outer surface. The journal oil holes 35a and 35b include first journal oil holes 35a and second journal oil holes 35b. The first journal oil holes 35a are aligned with the outer oil grooves mb of the eccentric shaft M3 and with the first and second sliders S1 and S2. The second journal oil holes 35b are aligned with the inner oil grooves md of the eccentric shaft M3 and with the first and second connecting rods CN1 and CN2. The first and second journal portions JA1 and JA2 each have a wall portion surrounding the perforation 22. As shown in Fig. 38, the wall portion can be divided into a thick wall portion having a large thickness and a thin wall portion having a smaller thickness than the thick wall portion, where the thickness represents the dimension in the direction perpendicular to the axial direction of the rotational shaft. The journal oil holes 35a and 35b extend through the thin wall portion of the first and second journal portions JA1 and JA2.

The oil, which has reached the in-shaft oil channel 34, flows through the first and third oil holes 41 and 43, the outer and inner oil grooves mb and md, and the first and second journal oil holes 35a and 35b, to be fed to the first and second sliders S1 and S2 and to the first and second connecting rods CN1 and CN2. The first and second sliders S1 and S2 have the slider oil holes h1 that are open at the guide surfaces GA1 and GA2. The oil supplied to the first and second sliders S1 and S2 contributes to reducing the contact friction between (i) the first and second sliders S1 and S2 and (ii) the guides 30 and 32.

There is a gap between (i) the inner surface of the journal portions JA1 and JA2 and (ii) the dented portions mc. This can result in reducing the contact resistance between the journal portions JA1 and JA2 and the eccentric shaft M3. The gap defined by the dented portions mc is filled with the lubricating oil to lubricate the journal portions JA1 and JA2 and the eccentric shaft M3. The second oil holes 42, which are open at the dented portions mc, have a smaller diameter than the first and third oil holes 41 and 43, which are open respectively at the outer and inner oil grooves mb and md. This may lead to reliable delivery of the oil to the sliders S1 and S2 and the connecting rods CN1 and CN2.

The fourth oil hole 44, which is open at the middle of the eccentric shaft M3 in the axial direction, can supply the oil to the space between the journal portions JA1 and JA2. The connecting rods CN1 and CN2 are supported by the journal portions at the middle in the axial direction. The oil is delivered through the fourth oil hole 44 to the space between the connecting rods CN1 and CN2, which are adjacent to each other in the middle portion of the eccentric shaft M3 in the axial direction.

The drive device 10 relating to the present variation includes: the case 12; the first crankshaft CR1; and the second crankshaft CR2. The first crankshaft CR1 includes the main shafts M1 and M2; and the eccentric shaft M3. The main shafts M1 and M2 have the first central axis C1, and the eccentric shaft M3 has the second central axis C2 parallel to the first central axis C1. The eccentric shaft M3 is shifted from the main shafts M1 and M2. The respective ends of the main shafts M1 and M2 in the axial direction are supported by the case 12 such that the main shafts M1 and M2 can rotate on the first central axis C1. The second crankshaft CR2 is supported by the eccentric shaft M3 such that the second crankshaft CR2 can rotate on the second central axis C2. The second crankshaft CR2 includes the first and second journal portions JA1 and JA2 having the central axis shifted from the second central axis C2 in the opposite directions. The drive device 10 also includes: the first slider S1 rotatably provided on the first journal portion JA1; the second slider S2 rotatably provided on the second journal portion JA2; the first moving unit (the first piston P1 and connecting rod CN1) rotatably connected to the first journal portion JA1 and configured to perform linear motion in the first direction (Y direction) orthogonal to the first central axis C1 as the first journal portion JA1 moves; the first guide 30 provided on the case 12 and configured to guide movement of the first slider S1 along the first direction; and the second guide 32 provided on the case 12 and configured to guide movement of the second slider S2 along the second direction (Z direction), the second direction being orthogonal to the first central axis C1 and to the first direction. The eccentric shaft M3 is a hollow shaft. The internal space in the eccentric shaft M3 constitutes the in-shaft oil channel 34 to deliver the lubricating oil to the second crankshaft CR2 and the movable parts supported by the second crankshaft CR2. The eccentric shaft M3 has the oil holes 41 to 44 that extend from the in-shaft oil channel 34 outward in the radial direction and open at the outer periphery of the eccentric shaft M3.

In this manner, the lubricating oil can be delivered to the movable parts supported by the eccentric shaft M3 via the in-shaft oil channel 34 and oil holes 41 to 44 in the eccentric shaft M3. The drive device relating to the variation can thus meet such demand that long-term smooth operation may be assured even with a complex mechanism such as the two-axis oscillating linear drive mechanism 20.

### <Base End of Cylinder Liner>

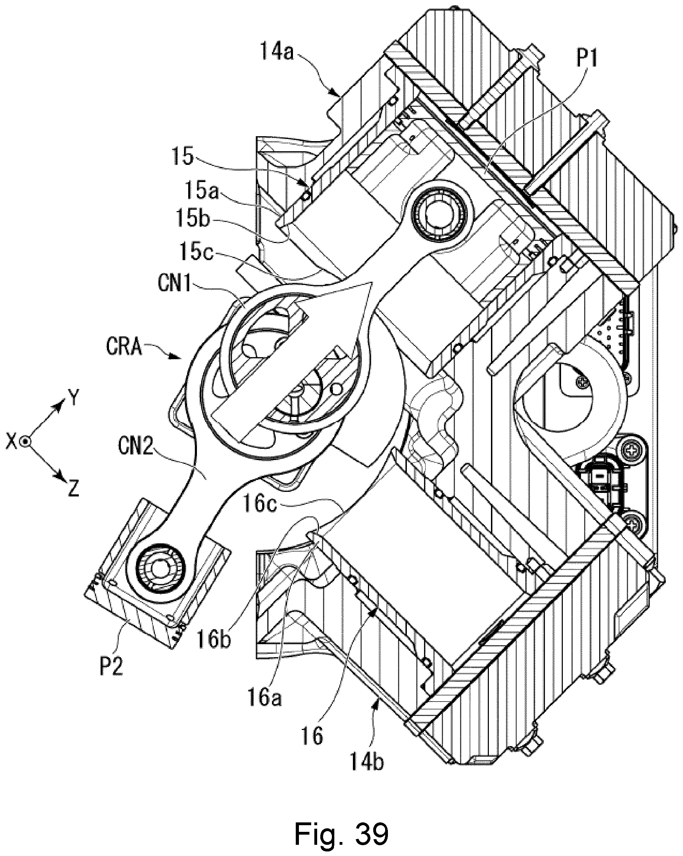

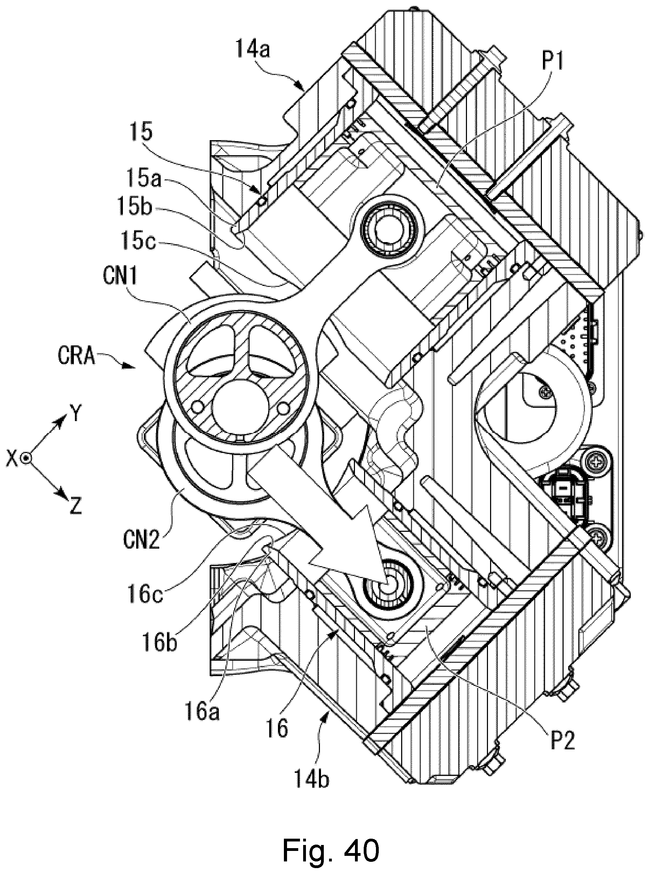

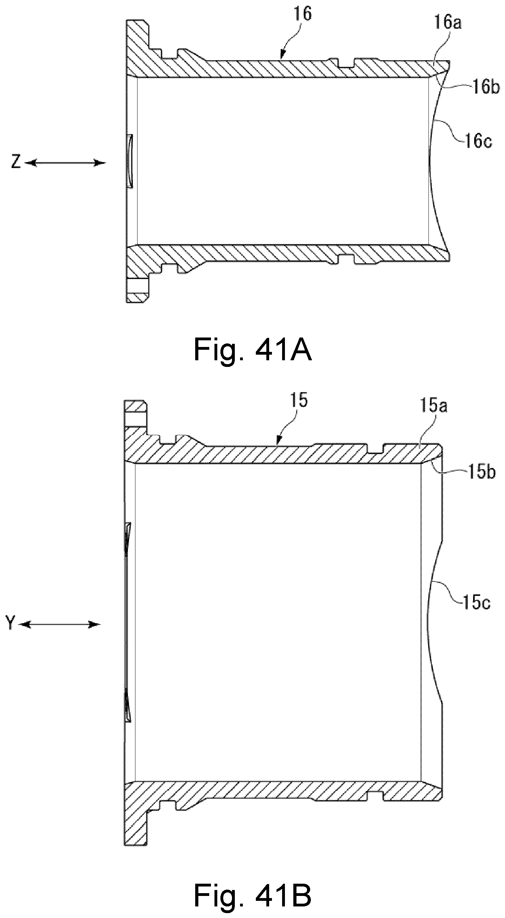

The following description is made with reference to Figs. 39 to 41B. The first and second cylinders 14a and 14b respectively have cylinder liners 15 and 16 shaped like a circular cylinder into which the pistons P1 and P2 can be inserted such that they can reciprocate. The cylinder liners 15 and 16 have their base end (one end in the cylinder axial direction) 15a, 16a facing the crank chamber of the crankcase 12 that houses the crankshafts CR1 and CR2.

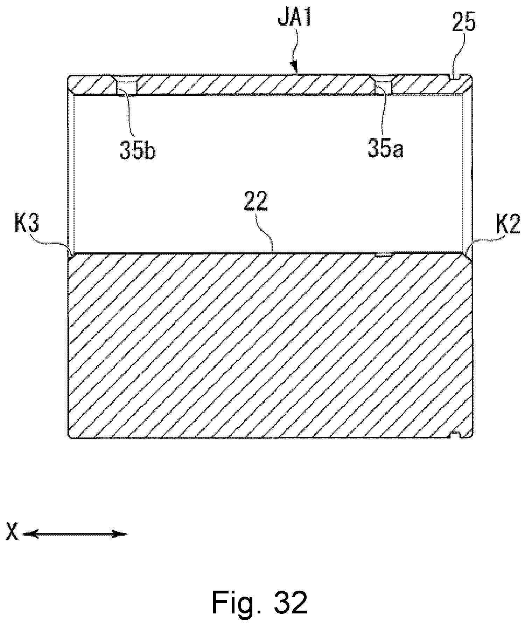

The following description is made with reference to Fig. 37. In the drive device 10 relating to the present embodiment, the first and second journal portions JA1 and JA2 of the second crankshaft CR2 have the connecting rods CN1 and CN2, the internal counterweights IW1 and IW2, and the sliders S1 and S2 assembled thereon in this order in the axial direction. At the outer ends of the first and second journal portions JA1 and JA2 in the axial direction of the second crankshaft CR2, a snap ring 24 is attached to stop the movable parts assembled on the journal portions from falling out. The snap rings 24 are mounted in ring grooves 25 shown in Figs. 31 and 32. The movable parts can be thus prevented from falling out from the journal portions in a simplified and compact manner. In a case where the guide member 30C is annularly shaped and provided as a single piece of unit (see Fig. 21), the guide member 30C is also assembled in advance onto the outer periphery of the sliders.

Furthermore, the eccentric shaft M3 is inserted into the perforation 22 of the respective journal portions, and the first and second counterweights W1 and W2 (including the first and second main shafts M1 and M2) are respectively mounted and secured onto the protruding shafts mt of the eccentric shaft M3. In this manner, the moving parts such as connecting rods CN1 and CN2, inner counterweights IW1 and IW2 and sliders S1 and S2 are assembled onto the second crankshaft CR2, and so are the eccentric shaft M3 and counterweights W1 and W2. As a result, the crankshaft assembly CRA is completed.

The connecting rods CN1 and CN2 respectively have their corresponding pistons at the small end. The pistons are assembled in advance. When a common piston is inserted into a cylinder, a cylindrical piston ring compressor is used to reduce the outer diameter of the piston ring to insert the piston into the cylinder from the cylinder head side. However, the pistons P1 and P2, which are part of the crankshaft assembly CRA, are inserted into the cylinders 14a and 14b from the crankcase side, not from the cylinder head side. For this reason, piston ring compressors cannot be used because they interfere with other parts.

In the embodiment, the base ends 15a and 16a of the cylinder liners 15 and 16 facing the crank chamber have, at the inner periphery, tapered piston ring guide surfaces 15b and 16b, which expand in diameter toward the end of the cylinder liners 15 and 16. This eliminates the need of piston ring compressors to insert the pistons P1 and P2 into the cylinder liners 15 and 16. Specifically, when the pistons P1 and P2 are pushed axially into the cylinder liners 15 and 16, the piston rings are contracted in diameter along the inclined piston ring guide surfaces 15b and 16b.

During assembly of the two-cylinder drive device 10, after one of the pistons is inserted into the cylinder liner, the other piston is coaxially positioned to face the base end of the corresponding cylinder liner while the remaining parts, including the connecting rod, are oscillated. After this, the other piston is inserted in the axial direction into the corresponding cylinder liner. Since the other piston and cylinder liner must be coaxially arranged, the counterweights W1, W2 and IW1, IW2, which protrude in the radial direction of the crankshaft assembly CRA, in particular, tend to interfere with the base ends 15a and 16a of the cylinder liners 15 and 16.

According to the above-described configuration, the base ends 15a and 16a of the cylinder liners 15 and 16 have at the respective sides with respect to the crankshaft direction (at the sites where interference with the counterweights is expected) have arc-shaped notches 15c and 16c, which are convex toward the non-base end (the cylinder head) of the cylinder liners 15 and 16 when viewed in the crankshaft direction. The presence of the arc-shaped notches 15c and 16c can result in avoiding the interference between the base ends 15a and 16a of the cylinder liners 15 and 16 and the counterweights of the crankshaft assembly CRA while allowing the pistons P1 and P2 of the crankshaft assembly CRA to be inserted into the respective cylinder liners 15 and 16. Forming the arc-shaped notches 15c and 16c on the respective sides with respect to the crankshaft direction, rather than simply shortening the base ends 15a and 16a of the cylinder liners 15 and 16 can avoid the interference between the cylinder liners 15 and 16 and the counterweights while still enabling the piston rings to be contracted.

The drive device 10 relating to the present variation includes: the case 12; the first crankshaft CR1; and the second crankshaft CR2. The first crankshaft CR1 includes the main shafts M1 and M2; and the eccentric shaft M3. The main shafts M1 and M2 have the first central axis C1, and the eccentric shaft M3 has the second central axis C2 parallel to the first central axis C1. The eccentric shaft M3 is shifted from the main shafts M1 and M2. The respective ends of the main shafts M1 and M2 in the axial direction are supported by the case 12 such that the main shafts M1 and M2 can rotate on the first central axis C1. The second crankshaft CR2 is supported by the eccentric shaft M3 such that the second crankshaft CR2 can rotate on the second central axis C2. The second crankshaft CR2 includes the first and second journal portions JA1 and JA2 having the central axis shifted from the second central axis C2 in the opposite directions. The drive device 10 also includes: the first slider S1 rotatably provided on the first journal portion JA1; the second slider S2 rotatably provided on the second journal portion JA2; the first moving unit (the first piston P1 and connecting rod CN1) rotatably connected to the first journal portion JA1 and configured to perform linear motion in the first direction (Y direction) orthogonal to the first central axis C1 as the first journal portion JA1 moves; the first guide 30 provided on the case 12 and configured to guide movement of the first slider S1 along the first direction; the second guide 32 provided on the case 12 and configured to guide movement of the second slider S2 along the second direction (Z direction), the second direction being orthogonal to the first central axis C1 and to the first direction; and the third guide 14a (first cylinder 14a) provided on the case 12, the third guide 14a being configured to guide linear motion of the first moving body. The third guide 14a has the first cylinder 14a provided on the case 12 and extending in the first direction. The first moving unit has the first piston P1 inserted into the cylinder liner 15 of the first cylinder 14a such that the first piston P1 can reciprocate in the first direction. The base end 15a of the cylinder liner 15 facing the case 12 has the tapered inner surface 15b the diameter of which increases toward the end and has the arc-shaped notch 15c when viewed in the axial direction of the second crankshaft CR2.

In this manner, the base ends 15a and 16a of the cylinder liners 15 and 16 have the tapered inner surfaces 15b and 16b the diameter of which increases toward the end. The tapered inner surfaces 15b and 16b thus serve as guide surfaces for compressing the piston rings. Therefore, a piston ring compressor is no longer required to insert the pistons P1 and P2 into the cylinder liners 15 and 16 from the case 12 side. The above-described configuration can produce another advantageous effect. The moving parts such as the connecting rods CN1 and CN2, inner counterweights IW1 and IW2 and sliders S1 and S2 can be assembled in advance onto the second crankshaft CR2, and so can be the eccentric shaft M3 and counterweights W1 and W2. After the crankshaft assembly CRA is thus completed, the pistons P1 and P2 may be inserted into the cylinder liners 15 and 16 from the case 12 side. Since the notches 15b and 16b are formed on the base ends 15a and 16a of the cylinder liners 15 and 16 at the respective sides with respect to the crankshaft direction, the interference between the counterweights and the base ends 15a and 16a of the cylinder liners 15 and 16 can be reduced. The drive device relating to the variation can thus meet such demand that simplified manufacturing and assembling may be assured even with a complex mechanism such as the two-axis oscillating linear drive mechanism 20.

### <Downgauging of Connecting Rods>

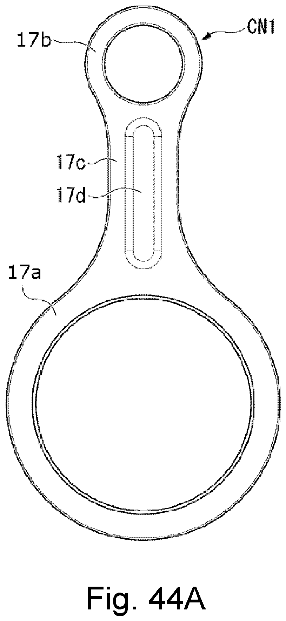

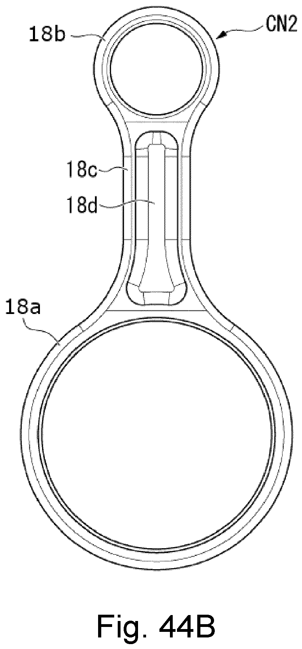

The following description is made with reference to Figs. 44A and 44B. The drive device 10 described here includes: the case 12; the first crankshaft CR1; and the second crankshaft CR2. The first crankshaft CR1 includes the main shafts M1 and M2; and the eccentric shaft M3. The main shafts M1 and M2 have the first central axis C1, and the eccentric shaft M3 has the second central axis C2 parallel to the first central axis C1. The eccentric shaft M3 is shifted from the main shafts M1 and M2. The respective ends of the main shafts M1 and M2 in the axial direction are supported by the case 12 such that the main shafts M1 and M2 can rotate on the first central axis C1. The second crankshaft CR2 is supported by the eccentric shaft M3 such that the second crankshaft CR2 can rotate on the second central axis C2. The second crankshaft CR2 includes the first and second journal portions JA1 and JA2 having the central axis shifted from the second central axis C2 in the opposite directions. The drive device 10 also includes: the first slider S1 rotatably provided on the first journal portion JA1; the second slider S2 rotatably provided on the second journal portion JA2; the first moving unit (the first piston P1 and connecting rod CN1) rotatably connected to the first journal portion JA1 and configured to perform linear motion in the first direction (Y direction) orthogonal to the first central axis C1 as the first journal portion JA1 moves; the second moving unit (the second piston P2 and connecting rod CN2) rotatably connected to the second journal portion JA2 and configured to perform linear motion in the second direction (Z direction) orthogonal to the first central axis C1 and to the first direction as the second journal portion JA2 moves; the first guide 30 provided on the case 12 and configured to guide movement of the first slider S1 along the first direction; and the second guide 32 provided on the case 12 and configured to guide movement of the second slider S2 along the second direction (Z direction), the second direction being orthogonal to the first central axis C1 and to the first direction. The connecting rod CN1 of the first moving unit and the connecting rod CN2 of the second moving unit have different downgauging portions.

The connecting rod CN1 of the first moving unit have a large end 17a and a small end 17b, and the connecting rod CN2 of the second moving unit have a large end 18a and a small end 18b. The large ends 17a and 18a are positioned near the journal portions, and the small ends 17b and 18b are positioned near the pistons. The connecting rod CN1 has a rod portion 17c between the large and small ends 17a and 17b. The rod portion 17c has downgauging portions 17d facing each other in the axial direction. Similarly, the connecting rod CN2 has a rod portion 18c between the large and small ends 18a and 18b. The rod portion 18c has downgauging portions 18d facing each other in the axial direction. Adjusting the shape and depth of the downgauging portions 17d and 18d can assist in balancing the rotation of the drive shaft in the drive device 10 having cylinders of different diameters. The drive device relating to the variation can thus meet such demand that simplified manufacturing and assembling may be assured even with a complex mechanism such as the two-axis oscillating linear drive mechanism 20.

### <How to Connect Main Shafts and Motor Drive Shaft>

Referring to Fig. 43, the electric motor 50, which serves as the drive source of the drive device 10, is provided on one side in the axial direction of the drive device 10. The main shaft M2, which is located on one side in the axial direction of the drive device 10, is coaxially connected to the drive shaft (motor drive shaft) 51 of the electric motor 50. The motor drive shaft 51 is coaxially connected to the second main shaft M2 (or first main shaft M1) using a coupling 55.

The motor drive shaft 51 is hollow and open at the opposite ends in the axial direction of the electric motor 50. The motor drive shaft 51 approaches the main shaft M2 from outside in the axial direction, so that the motor drive shaft 51 and the main shaft M2 are connected by inserting the main shaft M2 into one of the ends of the motor drive shaft 51 in the axial direction. The main shaft M2 has a nut hole that is open at the end face. The coupling 55 is inserted into the motor drive shaft 51 through the other end.

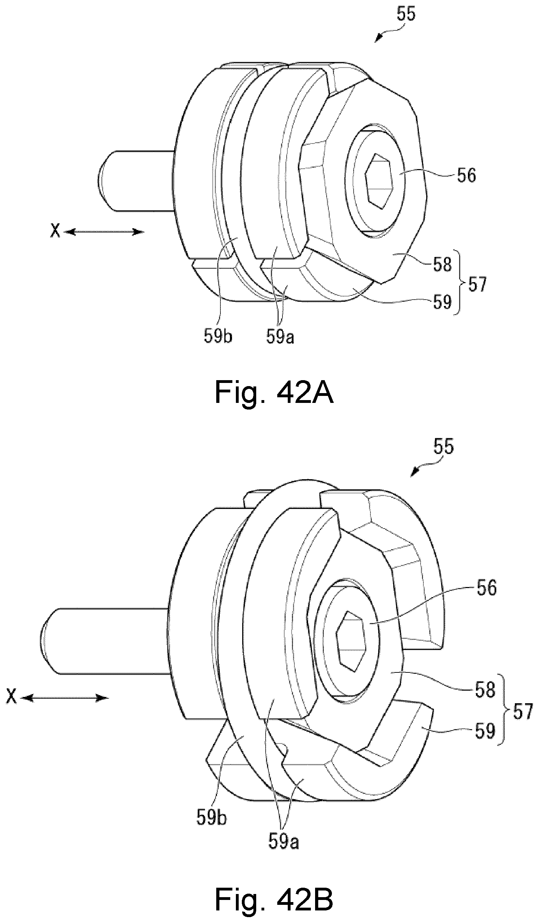

The following description is made with reference to Figs. 42A and 42B. The coupling 55 has a connecting bolt 56 and an increased-diameter washer device 57. The connecting bolt 56 is screwed and tightened into the nut hole of the main shaft M2, which extends along the central axis of the main shaft M2. The increased-diameter washer device 57 is configured to abut against a reduced-diameter portion 52, which is formed on the inner periphery of the drive shaft 51 (external shaft), from outside in the axial direction. The increased-diameter washer device 57 has a plurality of movable elements (segments 59a, described below) and is configured to cause the movable elements to equally move outward in the radial direction as the connecting bolt 56 is tightened.

The increased-diameter washer device 57 includes an inner member 58 and an outer member 59. The inner member 58 constitutes counter boring where the head of the connecting bolt 56 can rest. The inner member 58 has an outer tapered surface the diameter of which decreases toward the tip of the connecting bolt 56 (toward the main shaft M2). The inner member 58 is shaped like a truncated cone. The outer member 59 has an inner tapered surface compatible with the outer tapered surface of the inner member 58. The outer member 59 has an outer surface having a smaller diameter than the inner surface of the motor drive shaft 51. The outer member 59 is shaped like a circular cylinder.

The outer member 59 is evenly divided into a plurality of (three in the drawing) segments 59a arranged next to each other in the circumferential direction. While the coupling 55 is placed by itself, the segments 59a are drawn together inward in the radial direction and kept in a reduced-diameter state (see Fig. 42A), for example, with an endless elastic member 59b being wrapped around the outer member 59 in a circumferential groove.

The coupling 55 is inserted into the motor drive shaft 51, and the connecting bolt 56 is attached to and tightened into the main shaft M2. As a result, the increased-diameter washer device 57 is compressed in the axial direction between the reduced-diameter portion 52 of the drive shaft 51 and the head of the connecting bolt 56. This results in pushing the inner member 58 into the recess defined by the inner tapered surface of the outer member 59. Then, along the outer tapered surface of the inner member 58 and the inner tapered surface of the outer member 59, the segments 59a of the outer member 59 overcome the biasing force of the elastic member 59b and move outward in the radial direction.

The segments 59a move outward in the radial direction equally along the inner and outer tapered surfaces and eventually transition to an increased diameter state (see Fig. 42B). Specifically, the outer surface of the segments 59a butt up against the inner surface of the motor drive shaft 51. As the connecting bolt 56 is further tightened, the outer surface of the segments 59a press against the inner surface of the motor drive shaft 51. As a result, the main shaft M2 is aligned with the motor drive shaft 51. By simply tightening the connecting bolt 56 of the coupling 55, the main shaft M2 can be accurately and coaxially connected with the motor drive shaft 51.

The drive device 10 relating to the present variation includes: the case 12; the first crankshaft CR1; and the second crankshaft CR2. The first crankshaft CR1 includes the main shafts M1 and M2; and the eccentric shaft M3. The main shafts M1 and M2 have the first central axis C1, and the eccentric shaft M3 has the second central axis C2 parallel to the first central axis C1. The eccentric shaft M3 is shifted from the main shafts M1 and M2. The respective ends of the main shafts M1 and M2 in the axial direction are supported by the case 12 such that the main shafts M1 and M2 can rotate on the first central axis C1. The second crankshaft CR2 is supported by the eccentric shaft M3 such that the second crankshaft CR2 can rotate on the second central axis C2. The second crankshaft CR2 includes the first and second journal portions JA1 and JA2 having the central axis shifted from the second central axis C2 in the opposite directions. The drive device 10 also includes: the first slider S1 rotatably provided on the first journal portion JA1; the second slider S2 rotatably provided on the second journal portion JA2; the first moving unit (the first piston P1 and connecting rod CN1) rotatably connected to the first journal portion JA1 and configured to perform linear motion in the first direction (Y direction) orthogonal to the first central axis C1 as the first journal portion JA1 moves; the second moving unit (the second piston P2 and connecting rod CN2) rotatably connected to the second journal portion JA2 and configured to perform linear motion in the second direction (Z direction) orthogonal to the first central axis C1 and to the first direction as the second journal portion JA2 moves; the first guide 30 provided on the case 12 and configured to guide movement of the first slider S1 along the first direction; and the second guide 32 provided on the case 12 and configured to guide movement of the second slider S2 along the second direction (Z direction), the second direction being orthogonal to the first central axis C1 and to the first direction. The main shaft M1, M2 is coaxially connected to the hollow drive shaft 51, which is located outside in the axial direction, with the main shaft M1, M2 being inserted into the drive shaft 51. The coupling 55, which is inserted into the drive shaft 51 from outside in the axial direction, can be used to connect the main shaft M1, M2 to the drive shaft 51. The coupling 55 includes the connecting bolt 56 and the increased-diameter washer device 57. The connecting bolt 56 is attached into the threaded hole that is in the main shaft M2 along the central axis. The increased-diameter is configured to butt up against the reduced-diameter portion 52 formed at the inner periphery of the drive shaft 51 from outside in the axial direction and has a plurality of moving elements that can equally move outward in the radial direction as the connecting bolt 56 is tightened so that the increased-diameter washer device 57 can transition to an increased-diameter state.

In this manner, by simply tightening the connecting bolt 56 of the coupling 55, the main shaft M2 can be accurately and coaxially connected with the motor drive shaft 51. The drive device relating to the variation can thus meet such demand that simplified manufacturing and assembling may be assured even with a complex mechanism such as the two-axis oscillating linear drive mechanism 20.

The several embodiments described herein represent a number of possible examples and are not intended to limit the scope of the invention. The novel embodiments may have various other forms and are susceptible to omission, replacement, and modification of various elements thereof without departing from the spirit of the invention. The embodiments and variations thereof are included in the scope and purport of the invention and are also included in the inventions recited in the claims and equivalents thereof. In the embodiments disclosed herein, a member formed of multiple components may be integrated into a single component, or conversely, a member formed of a single component may be divided into multiple components. As long as it is configured such that the purpose of the invention can be achieved, such components may be integrated or separately provided.

### LIST OF REFERENCE NUMBERS

- 10: drive device
- 12: case
- C1: first central axis
- C2: second central axis
- M1, M2: main shaft
- M3: eccentric shaft
- CR1: first crankshaft
- JA1: first journal portion
- JA2: second journal portion
- CR2: second crankshaft
- S1: first slider
- GA1, GA2: pair of guide surfaces
- S2: second slider
- GB1, GB2: pair of guide surfaces
- P1: first piston (first moving unit)
- CN1: connecting rod (first moving unit)
- P2: second piston (second moving unit)
- CN2: connecting rod (second moving unit)
- 30: first guide
- 30a: guide surface
- 32: second guide
- 32a: guide surface
- 14a: third guide, first cylinder
- 14b: fourth guide, second cylinder
- P1: first piston
- CN1: first connecting rod
- 22: perforation
- W1: first counterweight
- IW1: first internal counterweight
- W2: second counterweight
- IW2: second internal counterweight

## Claims

1. A drive device (10) comprising:
a case (12);
a first crankshaft (CR1) including a main shaft (M1, M2) and an eccentric shaft (M3), the main shaft (M1, M2) having a first central axis (C1), the eccentric shaft (M3) having a second central axis (C2) parallel to the first central axis (C1) and being eccentric to the main shaft (M1, M2), both axial ends of the main shaft (M1, M2) being supported by the case (12) so as to be rotatable around the first central axis (C1);
a second crankshaft (CR2) supported by the eccentric shaft (M3) so as to be rotatable around the second central axis (C2), the second crankshaft (CR2) including a first journal portion (JA1) and a second journal portion (JA2), the first journal portion (JA1) being eccentric to the second central axis (C2) in one direction, the second journal portion (JA2) being eccentric to the second central axis (C2) in another direction;
a first slider (S1) rotatably provided on the first journal portion (JA1);
a second slider (S2) rotatably provided on the second journal portion (JA2);
a first moving unit (P1, CN1) rotatably connected to the first journal portion (JA1) and configured to perform linear motion in a first direction orthogonal to the first central axis (C1) as the first journal portion (JA1) moves;
a first guide (30) provided on the case (12) and configured to guide movement of the first slider (S1) along the first direction; and
a second guide (32) provided on the case (12) and configured to guide movement of the second slider (S2) along a second direction, the second direction being orthogonal to the first central axis (C1) and orthogonal to the first direction,
wherein at least one guide selected from among the first guide (30) or the second guide (32) is a separate part from the case (12), and the at least one guide is detachably secured onto the case (12).

2. The drive device (10) of claim 1,
wherein the at least one guide separate from the case (12) is secured onto the case (12) using a bolt, and
wherein the bolt is oriented orthogonally to the first central axis (C1) and orthogonally to a moving direction in which the slider (S1, S2) is movable as being guided by the at least one guide separate from the case (12).

3. A drive device (10) comprising:
a case (12);
a first crankshaft (CR1) including a main shaft (M1, M2) and an eccentric shaft (M3), the main shaft (M1, M2) having a first central axis (C1), the eccentric shaft (M3) having a second central axis (C2) parallel to the first central axis (C1) and being eccentric to the main shaft (M1, M2), both axial ends of the main shaft (M1, M2) being supported by the case (12) so as to be rotatable around the first central axis (C1);
a second crankshaft (CR2) supported by the eccentric shaft (M3) so as to be rotatable around the second central axis (C2), the second crankshaft (CR2) including a first journal portion (JA1) and a second journal portion (JA2), the first journal portion (JA1) being eccentric to the second central axis (C2) in one direction, the second journal portion (JA2) being eccentric to the second central axis (C2) in another direction;
a first slider (S1) rotatably provided on the first journal portion (JA1);
a second slider (S2) rotatably provided on the second journal portion (JA2);
a first moving unit (P1, CN1) rotatably connected to the first journal portion (JA1) and configured to perform linear motion in a first direction orthogonal to the first central axis (C1) as the first journal portion (JA1) moves;
a first guide (30) provided on the case (12) and configured to guide movement of the first slider (S1) along the first direction; and
a second guide (32) provided on the case (12) and configured to guide movement of the second slider (S2) along a second direction, the second direction being orthogonal to the first central axis (C1) and orthogonal to the first direction,
wherein at least one slider selected from among the first slider (S1) and the second slider (S2) has a pair of lateral portions (GA1 and GA2) extending in a moving direction in which the at least one slider is movable, the lateral portions (GA1 and GA2) facing each other in a width direction orthogonal to the moving direction when viewed in an axial direction extending along the first central axis (C1), and
wherein the lateral portions (GA1 and GA2) each have an arc-shaped portion (r1) having a convex curvature outwardly in the width direction when viewed in the axial direction extending along the first central axis (C1).

4. The drive device (10) of claim 3, wherein the lateral portions (GA1 and GA2) each have a straight portion (r2) extending along the moving direction when viewed in the axial direction extending along the first central axis (C1), the straight portion (r2) occupying a middle region of the arc-shaped portion (r1) in the moving direction.

5. A drive device (10) comprising:
a case (12);
a first crankshaft (CR1) including a main shaft (M1, M2) and an eccentric shaft (M3), the main shaft (M1, M2) having a first central axis (C1), the eccentric shaft (M3) having a second central axis (C2) parallel to the first central axis (C1) and being eccentric to the main shaft (M1, M2), both axial ends of the main shaft (M1, M2) being supported by the case (12) so as to be rotatable around the first central axis (C1);
a second crankshaft (CR2) supported by the eccentric shaft (M3) so as to be rotatable around the second central axis (C2), the second crankshaft (CR2) including a first journal portion (JA1) and a second journal portion (JA2), the first journal portion (JA1) being eccentric to the second central axis (C2) in one direction, the second journal portion (JA2) being eccentric to the second central axis (C2) in another direction;
a first slider (S1) rotatably provided on the first journal portion (JA1);
a second slider (S2) rotatably provided on the second journal portion (JA2);
a first moving unit (P1, CN1) rotatably connected to the first journal portion (JA1) and configured to perform linear motion in a first direction orthogonal to the first central axis (C1) as the first journal portion (JA1) moves;
a first guide (30) provided on the case (12) and configured to guide movement of the first slider (S1) along the first direction; and
a second guide (32) provided on the case (12) and configured to guide movement of the second slider (S2) along a second direction, the second direction being orthogonal to the first central axis (C1) and orthogonal to the first direction,
wherein the first and second journal portions (JA1 and JA2) are separate from each other and connected in an axial direction to constitute a single unit serving as the second crankshaft (CR2).

6. The drive device (10) of claim 5,
wherein the second crankshaft (CR2) has a perforation (22) extending through the first and second journal portions (JA1 and JA2),
wherein the eccentric shaft (M3) is inserted through the perforation (22), and
wherein an opening edge of the perforation (22) and an annular corner portion (k1) of an outer periphery of the eccentric shaft (M3) have a tapered surface inclined with respect to the axial direction and a radial direction.

7. The drive device (10) of claim 5 or 6,
wherein the first crankshaft (CR1) includes a first counterweight (W1) provided at one end of the eccentric shaft (M3), and a second counterweight (W2) provided at another end of the eccentric shaft (M3), and
wherein at least one of the first counterweight (W1) or the second counterweight (W2) is a separate part from the eccentric shaft (M3).

8. A drive device (10) comprising:
a case (12);
a first crankshaft (CR1) including a main shaft (M1, M2) and an eccentric shaft (M3), the main shaft (M1, M2) having a first central axis (C1), the eccentric shaft (M3) having a second central axis (C2) parallel to the first central axis (C1) and being eccentric to the main shaft (M1, M2), both axial ends of the main shaft (M1, M2) being supported by the case (12) so as to be rotatable around the first central axis (C1);
a second crankshaft (CR2) supported by the eccentric shaft (M3) so as to be rotatable around the second central axis (C2), the second crankshaft (CR2) including a first journal portion (JA1) and a second journal portion (JA2), the first journal portion (JA1) being eccentric to the second central axis (C2) in one direction, the second journal portion (JA2) being eccentric to the second central axis (C2) in another direction;
a first slider (S1) rotatably provided on the first journal portion (JA1);
a second slider (S2) rotatably provided on the second journal portion (JA2);
a first moving unit (P1, CN1) rotatably connected to the first journal portion (JA1) and configured to perform linear motion in a first direction orthogonal to the first central axis (C1) as the first journal portion (JA1) moves;
a first guide (30) provided on the case (12) and configured to guide movement of the first slider (S1) along the first direction; and
a second guide (32) provided on the case (12) and configured to guide movement of the second slider (S2) along a second direction, the second direction being orthogonal to the first central axis (C1) and orthogonal to the first direction,
wherein a separate counterweight is detachably attached to at least one journal portion selected from among the first journal portion (JA1) and the second journal portion (JA2), and
wherein the separate counterweight is divided into a circular arc portion (W4) and a free portion in a circumferential direction of the at least one journal portion, the circular arc portion (W4) being in contact with an outer surface of the at least one journal portion in a region that is occupied by an eccentric weight, and the free portion being a vacant space extending in the circumferential direction that is not occupied by the eccentric weight.

9. The drive device (10) of claim 8,
wherein the at least one journal portion to which the separate counterweight is attached has a recess (28) depressed inwardly from the outer surface,
wherein the separate counterweight has a protrusion (29) received in the recess, and
wherein at least one of the recess (28) or the protrusion (29) has a surface that extends in a direction intersecting with the circumferential direction of the outer surface and that is configured to butt up against another one of the recess (28) or the protrusion (29) in the circumferential direction.

10. A drive device (10) comprising:
a case (12);
a first crankshaft (CR1) including a main shaft (M1, M2) and an eccentric shaft (M3), the main shaft (M1, M2) having a first central axis (C1), the eccentric shaft (M3) having a second central axis (C2) parallel to the first central axis (C1) and being eccentric to the main shaft (M1, M2), both axial ends of the main shaft (M1, M2) being supported by the case (12) so as to be rotatable around the first central axis (C1);
a second crankshaft (CR2) supported by the eccentric shaft (M3) so as to be rotatable around the second central axis (C2), the second crankshaft (CR2) including a first journal portion (JA1) and a second journal portion (JA2), the first journal portion (JA1) being eccentric to the second central axis (C2) in one direction, the second journal portion (JA2) being eccentric to the second central axis (C2) in another direction;
a first slider (S1) rotatably provided on the first journal portion (JA1);
a second slider (S2) rotatably provided on the second journal portion (JA2);
a first moving unit (P1, CN1) rotatably connected to the first journal portion (JA1) and configured to perform linear motion in a first direction orthogonal to the first central axis (C1) as the first journal portion (JA1) moves;
a first guide (30) provided on the case (12) and configured to guide movement of the first slider (S1) along the first direction; and
a second guide (32) provided on the case (12) and configured to guide movement of the second slider (S2) along a second direction, the second direction being orthogonal to the first central axis (C1) and orthogonal to the first direction,
wherein the eccentric shaft (M3) is a hollow shaft, and an internal space in the eccentric shaft (M3) constitutes an in-shaft oil channel to deliver a lubricating oil to the second crankshaft (CR2) and to movable parts supported by the second crankshaft (CR2), and
wherein the eccentric shaft (M3) has an oil hole that extends from the in-shaft oil channel outwardly in a radial direction and that is open at an outer periphery of the eccentric shaft (M3).

11. A drive device (10) comprising:
a case (12);
a first crankshaft (CR1) including a main shaft (M1, M2) and an eccentric shaft (M3), the main shaft (M1, M2) having a first central axis (C1), the eccentric shaft (M3) having a second central axis (C2) parallel to the first central axis (C1) and being eccentric to the main shaft (M1, M2), both axial ends of the main shaft (M1, M2) being supported by the case (12) so as to be rotatable around the first central axis (C1);
a second crankshaft (CR2) supported by the eccentric shaft (M3) so as to be rotatable around the second central axis (C2), the second crankshaft (CR2) including a first journal portion (JA1) and a second journal portion (JA2), the first journal portion (JA1) being eccentric to the second central axis (C2) in one direction, the second journal portion (JA2) being eccentric to the second central axis (C2) in another direction;
a first slider (S1) rotatably provided on the first journal portion (JA1);
a second slider (S2) rotatably provided on the second journal portion (JA2);
a first moving unit (P1, CN1) rotatably connected to the first journal portion (JA1) and configured to perform linear motion in a first direction orthogonal to the first central axis (C1) as the first journal portion (JA1) moves;
a first guide (30) provided on the case (12) and configured to guide movement of the first slider (S1) along the first direction;
a second guide (32) provided on the case (12) and configured to guide movement of the second slider (S2) along a second direction, the second direction being orthogonal to the first central axis (C1) and orthogonal to the first direction; and
a third guide (14a) provided on the case (12) and configured to guide the linear motion of the first moving unit (P1, CN1),
wherein the third guide (14a) has a first cylinder (14a) provided on the case (12) and extending in the first direction,
wherein the first moving unit (P1, CN1) has a first piston (P1) that is inserted into a cylinder liner (15) of the first cylinder (14a) such that the first piston (P1) reciprocates in the first direction, and
wherein a base end (15a) of the cylinder liner (15) facing the case (12) has a tapered inner surface (15b) that expands in diameter toward an end of the cylinder liner (15), and has an arc-shaped notch (15c) when viewed in an axial direction of the second crankshaft (CR2).

12. A drive device (10) comprising:
a case (12);
a first crankshaft (CR1) including a main shaft (M1, M2) and an eccentric shaft (M3), the main shaft (M1, M2) having a first central axis (C1), the eccentric shaft (M3) having a second central axis (C2) parallel to the first central axis (C1) and being eccentric to the main shaft (M1, M2), both axial ends of the main shaft (M1, M2) being supported by the case (12) so as to be rotatable around the first central axis (C1);
a second crankshaft (CR2) supported by the eccentric shaft (M3) so as to be rotatable around the second central axis (C2), the second crankshaft (CR2) including a first journal portion (JA1) and a second journal portion (JA2), the first journal portion (JA1) being eccentric to the second central axis (C2) in one direction, the second journal portion (JA2) being eccentric to the second central axis (C2) in another direction;
a first slider (S1) rotatably provided on the first journal portion (JA1);
a second slider (S2) rotatably provided on the second journal portion (JA2);
a first moving unit (P1, CN1) rotatably connected to the first journal portion (JA1) and configured to perform linear motion in a first direction orthogonal to the first central axis (C1) as the first journal portion (JA1) moves;
a second moving unit (P2, CN2) rotatably connected to the second journal portion (JA2) and configured to perform linear motion in a second direction orthogonal to the first central axis (C1) and orthogonal to the first direction as the second journal portion (JA2) moves;
a first guide (30) provided on the case (12) and configured to guide movement of the first slider (S1) along the first direction; and
a second guide (32) provided on the case (12) and configured to guide movement of the second slider (S2) along the second direction, the second direction being orthogonal to the first central axis (C1) and orthogonal to the first direction,
wherein the first moving unit (P1, CN1) includes a first piston (P1) and a first connecting rod (CN1), the first piston (P1) is configured to reciprocate in the first direction, and the first connecting rod (CN1) has one end connected to the first piston (P1) and another end rotatably connected to the first journal portion (JA1),
wherein the second moving unit (P2, CN2) includes a second piston (P2) and a second connecting rod (CN2), the second piston (P2) is configured to reciprocate in the second direction, and the second connecting rod (CN2) has one end connected to the second piston (P2) and another end rotatably connected to the second journal portion (JA2), and
wherein the first and second connecting rods (CN1 and CN2) respectively have different downgauging portions.

13. A drive device (10) comprising:
a case (12);
a first crankshaft (CR1) including a main shaft (M1, M2) and an eccentric shaft (M3), the main shaft (M1, M2) having a first central axis (C1), the eccentric shaft (M3) having a second central axis (C2) parallel to the first central axis (C1) and being eccentric to the main shaft (M1, M2), both axial ends of the main shaft (M1, M2) being supported by the case (12) so as to be rotatable around the first central axis (C1);
a second crankshaft (CR2) supported by the eccentric shaft (M3) so as to be rotatable around the second central axis (C2), the second crankshaft (CR2) including a first journal portion (JA1) and a second journal portion (JA2), the first journal portion (JA1) being eccentric to the second central axis (C2) in one direction, the second journal portion (JA2) being eccentric to the second central axis (C2) in another direction;
a first slider (S1) rotatably provided on the first journal portion (JA1);
a second slider (S2) rotatably provided on the second journal portion (JA2);
a first moving unit (P1, CN1) rotatably connected to the first journal portion (JA1) and configured to perform linear motion in a first direction orthogonal to the first central axis (C1) as the first journal portion (JA1) moves;
a first guide (30) provided on the case (12) and configured to guide movement of the first slider (S1) along the first direction;
a second guide (32) provided on the case (12) and configured to guide movement of the second slider (S2) along a second direction, the second direction being orthogonal to the first central axis (C1) and orthogonal to the first direction; and
a third guide (14a) provided on the case (12) and configured to guide the linear motion of the first moving unit (P1, CN1),
wherein the main shaft (M1, M2) is coaxially connected to a hollow external shaft (51) positioned outside in an axial direction with the main shaft (M1, M2) being received in the external shaft (51),
wherein the main shaft (M1, M2) and the external shaft (51) are connected by means of a coupling (55) that is inserted into the external shaft (51) from outside in the axial direction, and
wherein the coupling (55) includes:
a connecting bolt (56) mounted in a threaded hole in the main shaft (M1, M2) along a central axis; and
an increased-diameter washer device (57) configured to butt up against a reduced-diameter portion (52) formed at an inner periphery of the external shaft (51) from outside in the axial direction, the increased-diameter washer device (57) having a plurality of movable parts (59a) that are configured to equally move outward in a radial direction as the connecting bolt (56) is tightened to transition to an increased-diameter state.
